(19) Europäisches Patentamt
European Patent Office
Office européen des brevets

(11) **EP 4 365 841 B1**

(12) **EUROPEAN PATENT SPECIFICATION**

(45) Date of publication and mention
of the grant of the patent:
**29.04.2026  Bulletin 2026/18**

(21) Application number: **21953048.2**

(22) Date of filing: **09.08.2021**

(51) International Patent Classification (IPC):
**G06T 7/73** *(2017.01)*      **G06T 7/60** *(2017.01)*
**G06V 10/44** *(2022.01)*      **G06N 3/045** *(2023.01)*

(52) Cooperative Patent Classification (CPC):
**G06N 3/045; G06T 7/75; G06V 10/454;
G06V 10/82;** G06T 2207/10004; G06T 2207/20084;
G06T 2207/30244

(86) International application number:
**PCT/CN2021/111502**

(87) International publication number:
**WO 2023/015409 (16.02.2023 Gazette 2023/07)**

(54) **OBJECT POSE DETECTION METHOD AND APPARATUS, COMPUTER DEVICE, AND STORAGE MEDIUM**

VERFAHREN UND VORRICHTUNG ZUR ERKENNUNG EINER OBJEKTPOSE,
COMPUTERVORRICHTUNG UND SPEICHERMEDIUM

PROCÉDÉ ET APPAREIL DE DÉTECTION DE POSE D'OBJET, DISPOSITIF INFORMATIQUE ET
SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.05.2024  Bulletin 2024/19**

(73) Proprietor: **BIGO TECHNOLOGY PTE. LTD.
Singapore 117440 (SG)**

(72) Inventors:
• **JING, Xue
Guangzhou, Guangdong 511402 (CN)**
• **CHEN, Dejian
Guangzhou, Guangdong 511402 (CN)**
• **CHEN, Jianqiang
Guangzhou, Guangdong 511402 (CN)**
• **CAI, Jiaran
Guangzhou, Guangdong 511402 (CN)**
• **XIANG, Wei
Guangzhou, Guangdong 511402 (CN)**

(74) Representative: **Yang, Shu
Withers & Rogers LLP
2 London Bridge
London SE1 9RA (GB)**

(56) References cited:
CN-A- 110 930 454       CN-A- 111 968 235
CN-A- 112 116 653       CN-A- 112 767 489
US-A1- 2018 137 644     US-A1- 2018 137 644

• VINCENT LEPETIT ET AL: "EPnP: An Accurate
O(n) Solution to the PnP Problem", ARXIV.ORG,
vol. 81, no. 2, 19 July 2008 (2008-07-19), 201 Olin
Library Cornell University Ithaca, NY 14853,
pages 155 - 166, XP055627426, DOI: 10.1007/
s11263-008-0152-6
• KAIMING HE ET AL: "Deep Residual Learning for
Image Recognition", 2016 IEEE CONFERENCE
ON COMPUTER VISION AND PATTERN
RECOGNITION (CVPR), 1 June 2016 (2016-06-01),
pages 770 - 778, XP055536240, ISBN:
978-1-4673-8851-1, DOI: 10.1109/CVPR.2016.90

- **ZHONGMIN WANG ET AL: "Mean-Shift Algorithm for 3D Spatial Positioning", PROCEDIA COMPUTER SCIENCE, ELSEVIER, AMSTERDAM, NL, vol. 131, 11 May 2018 (2018-05-11), pages 446 - 453, XP085395750, ISSN: 1877-0509, DOI: 10.1016/ J.PROCS.2018.04.251**
- **KANG JIA ET AL: "YOLO-6D+: Single Shot 6D Pose Estimation Using Privileged Silhouette Information", 2020 INTERNATIONAL CONFERENCE ON IMAGE PROCESSING AND ROBOTICS (ICIP), 6 March 2020 (2020-03-06), pages 1 - 6, XP093261063, ISBN: 978-1-7281-6541-7, DOI: 10.1109/ ICIP48927.2020.9367354**

Description

TECHNICAL FIELD

The present disclosure relates to the technical field of computer vision, and in particular, relates to a method and apparatus for detecting object poses, a computer device and a storage medium thereof.

BACKGROUND

In service scenarios such as short videos, live streaming, automatic driving, augmented reality (AR), and robotics, 3-dimensional (3D) target detection is usually performed, information about an object as a target in 3D space is detected, and service processing such as adding special effects, route planning, and motion trajectory planning is performed.
CN110930454A discloses a six-degree-of-freedom position estimation algorithm based on the localization of key-points outside a bounding box, utilizing the EPnP algorithm to compute a six-degree-of-freedom position of a target relative to a camera.
US2018/137644A1 discloses methods and systems of performing object pose estimation. The three-dimensional pose of the object is estimated using the plurality of 2D projections of the 3D bounding box. Zhongmin Wang et al: "Mean-Shift Algorithm for 3D Spatial Positioning", PROCEDIA COMPUTER SCIENCE, ELSEVIER, AMSTERDAM, NL, discloses the issue of dynamic ambiguity, which can achieve the object's real-time attitude estimation.
Kang Jia et al: "YOLO-6D+: Single Shot 6D Pose Estimation Using Privileged Silhouette Information", 2020 International Conference on Image Processing and Robotics (ICIP) discloses a novel silhouette prediction branch that outputs the predicted segmentation mask in our network.

SUMMARY

Embodiments of the present disclosure provide a method and apparatus for detecting object poses, and a computer device and a storage medium thereof.
According to some embodiments of the present disclosure, a method for detecting object poses is provided.
The method is as defined in claim 1.
In some embodiments, a number of the bottleneck residual blocks in the first residual network is less than a number of the bottleneck residual blocks in the second residual network, the number of the bottleneck residual blocks in the second residual network is less than a number of the bottleneck residual blocks in the third residual network, the number of the bottleneck residual blocks in the third residual network is less than a number of the bottleneck residual blocks in the fourth residual network, and the number of the bottleneck residual blocks in the fourth residual network is equal to a number of the bottleneck residual blocks in the fifth residual network; and
a dimension of the second level feature is higher than a dimension of the third level feature, the dimension of the third level feature is higher than a dimension of the fourth level feature, the dimension of the fourth level feature is higher than a dimension of the fifth level feature, and the dimension of the fifth level feature is higher than a dimension of the sixth level feature.
In some embodiments, a dimension of the second image feature is higher than a dimension of the sixth level feature.
In some embodiments, the prediction network includes a first prediction network, a second prediction network, a third prediction network, and a fourth prediction network, wherein each of the first prediction network, the second prediction network, the third prediction network, and the fourth prediction network each includes a plurality of bottleneck residual blocks; and
mapping, in the prediction network, the second image feature to the two-dimensional first pose information of the bounding box includes: acquiring a center point of the bounding box by processing the second image feature in the first prediction network; acquiring a depth of the bounding box by processing the second image feature in the second prediction network; acquiring a scale of the bounding box by processing the second image feature in the third prediction network; and acquiring a distance in which a vertex in the bounding box offsets with respect to the center point by processing the second image feature in the fourth prediction network.
According to some embodiments of the present disclosure, an apparatus for detecting object poses is provided.
The apparatus is as defined in claim 6.
According to some embodiments of the present disclosure, a computer device for detecting object poses is provided.
The computer device includes: at least one processor; a memory, configured to store at least one program therein; wherein the at least one processor, when loading and running the at least one program, is caused to perform the method for detecting object poses as described above.

According to some embodiments of the present disclosure, a computer-readable storage medium is provided. The computer-readable storage medium stores at least one computer program therein. The at least one computer program, when loaded and run by a processor, causes the processor to perform the method for detecting object poses as described above.

## BRIEF DESCRIPTION OF DRAWINGS

FIG. 1 is a flowchart of a method for detecting object poses according to some embodiments of the present disclosure;
FIG. 2 is an exemplary diagram for detecting a pose of a target object according to some embodiments of the present disclosure;
FIG. 3 is an exemplary diagram of a one-stage network according to some other embodiments of the present disclosure;
FIG. 4 is an exemplary diagram of a two-stage network according to some other embodiments of the present disclosure;
FIG. 5 is a flowchart of a method of detecting object poses according to some other embodiments embodiment of the present disclosure;
FIG. 6 is a schematic structural diagram of an apparatus for detecting object poses according to some other embodiments of the present disclosure;
FIG. 7 is a schematic structural diagram of a computer device according to some other embodiments of the present disclosure;
FIG. 8 is a flowchart of detecting two-dimensional first pose information of a three-dimensional bounding box in response to being projection onto image data according to some other exemplary embodiments of the present disclosure;
FIG. 9 is a flowchart of detecting two-dimensional first pose information of a three-dimensional bounding box in response to being projection onto image data according to some other exemplary embodiments of the present disclosure;
FIG. 10 is a flowchart of mapping first pose information to second pose information in three dimensions according to some other exemplary embodiments of the present disclosure; and
FIG. 11 is a flowchart of detecting third pose information of a target object based on second pose information according to some other exemplary embodiments of the present disclosure.

## DETAILED DESCRIPTION

In the related art, 3D target detection methods are mainly categorized into the following four categories according to the form of input.

A first category includes monocular images, i.e., inputting one frame of image data captured by a single camera.

A second category includes binocular images, i.e., inputting two frames of image data captured by a binocular camera from two directions.

A third category includes point cloud, i.e., data of points in space captured by laser radar.

A fourth category includes a combination of point cloud and monocular image, i.e., simultaneously inputting one frame of image data captured by a single camera and data of points in space captured by laser radar.

For mobile terminals, monocular images are usually used since the binocular camera and laser radar have more complex structures, are more difficult to port to the mobile terminals, and are costly.

In the related art, the 3D target detection based on monocular images is mostly improved based on the center network, and directly estimates information of an object from the network in an end-to-end fashion. However, this method is more sensitive to rotation estimation, and a slight error such as 0.01 in rotation produces a large deviation in the information of the object, resulting in poor stability and accuracy.

To adapt the above conditions, some embodiments of the present disclosure provide a method for detecting object poses, an apparatus, a computer device, and a storage medium to improve the stability and accuracy of 3D target detection.

The present application is described hereinafter with reference to the accompanying drawings and some embodiments.

First embodiment

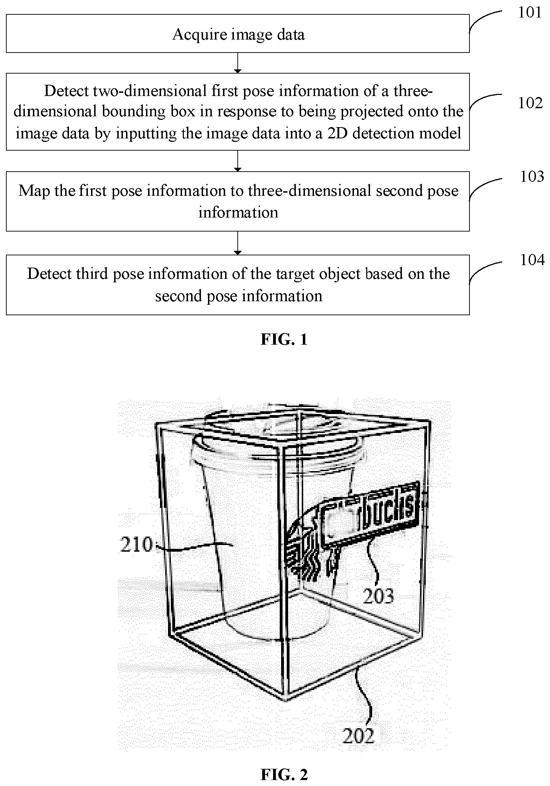

FIG. 1 is a flowchart of a method for detecting object poses according to some embodiments of the present disclosure. During the target detection of the embodiments, a 3D pose of an object is detected by mapping a 2-dimensional (2D) pose of a bounding box to a 3D pose. The method of detecting object poses described in the embodiments of the present disclosure is performed by an apparatus for detecting object poses, which is implemented by software and/or hardware, and is configured in a computer device that serves as a mobile terminal. The computer device includes, e.g., a cell phone, a tablet, a smart wearable device, or the like, and the smart wearable device includes, e.g., a smart eyeglass, a smartwatch, or the like.

Some embodiments of the present disclosure include the following steps.

In step 101, image data is acquired.

An operating system such as Android, iOS, HarmonyOS (Harmony System), or the like is installed in the computer device, and users may install applications desired by themselves in these operating systems, such as, for example, a live streaming application, a short video application, a beauty application, a meeting application, or the like.

The computer device is configured with one or more cameras. These cameras are mounted in the front of the computer device, also known as front cameras, or in the back of the computer device, also known as back cameras.

These applications may use image data from a local gallery and a network gallery of the computer device as image data to be used, or they may invoke the cameras to capture image data.

The image data includes an object as a detection target, which is denoted as a target object. The target object is set according to the needs of service scenarios, for example, a cup 201 as shown in FIG. 2, a notebook, a pen, a display, or the like.

Exemplarily, the applications invoke the camera toward the target object to capture video data. The video data includes a plurality of frames of image data, and the target object is tracked in the plurality of frames of image data by methods such as Kalman filtering, optical flow method, or the like.

In step 102, two-dimensional first pose information of a three-dimensional bounding box in response to being projected onto the image data is detected by inputting the image data into a 2D detection model.

The target object is in a real 3D space, and a three-dimensional bounding box is used to describe a pose of the target object in the 3D space. As shown in FIG. 2, the shape of the three-dimensional bounding box includes a rectangle 202, a cylinder, a sphere, or the like. The three-dimensional bounding box is a frame external to the target object 201, and the three-dimensional bounding box is used to detect the target object 201.

In the image data, the target object is represented as two-dimensional pixel points. The three-dimensional bounding box is recorded in the image data in a projection manner following the target object, and the three-dimensional bounding box is represented as two-dimensional pixel points. in this case, a pose of the three-dimensional bounding box as it is presented in the two-dimensional image data is calculated and denoted as the first pose information.

In some embodiments, a model for detecting the first pose information of the bounding box of the target object, denoted as a two-dimensional detection model, is pre-trained, such as MobileNetV2, ShuffleNetV2, or the like.

For the video data, all the frames of image data are input into the two-dimensional detection model for detection, or the image data is input into the two-dimensional detection model for detection separately every time interval, and prediction results for the time intervals are replaced by tracking.

The prediction results of the time intervals are replaced by tracking. For example, each frame is input into the model to acquire the result of each frame. With such a setup, each frame needs time consumption in response to being processed by the model, and thus the delay is serious. It is also not necessary to have each frame processed by the model. For example, the $0^{th}$ frame is processed by the model, the $5^{th}$ frame is processed by the model, but the result of each frame is acquired. In this case, the result of the 1st frame is acquired by tracking the result of the 0th frame.

In step 103, the first pose information is mapped to three-dimensional second pose information.

For example, in a case where the first pose information in a camera coordinate system is known, solving the second pose information in a world coordinate system is viewed as a Perspective-n-Point (PnP) problem, where a part of the first pose information of the target object in the camera coordinate system is mapped to the three-dimensional second pose information in the world coordinate system by PnP, Direct Linear Transform (DLT), Efficient PnP (EPnP), UPnP, or other pose estimation algorithms.

In some embodiments of the present disclosure, the first pose information includes a center point, a vertex, and a depth. The vertex of the target object in an image coordinate system is mapped to a vertex in the world coordinate system by the pose estimation algorithm.

For example, the depth refers to a distance between the object and the camera when the camera takes pictures.

In a case where an object detection frame is a rectangle, the vertices refer to 8 vertices of the rectangle.

Using a scenario where the EPnP algorithm is the pose estimation algorithm as an example, the EPnP algorithm better handles the situation of how to solve a pose of the camera from 3D point-2D point matching pairs. In some embodiments, a 2D point (e.g., a vertex) under the camera coordinate system is mapped to a 3D point (e.g., a vertex) in the camera coordinate system by using the EPnP algorithm, a depth of a center point is predicted by using the model, a ratio is acquired by dividing the depth with a depth estimated by the EPnP algorithm, a 3D point (e.g., a vertex) in the camera coordinate system with a true depth is acquired by multiplying the ratio by each vertex, and a 3D point (e.g., a vertex) in the world coordinate system is acquired by exteriorly multiplying this 3D point (e.g., a vertex) by the extrinsic of camera.

In step 104, third pose information of the target object is detected based on the second pose information.

In a case where the second pose information of the bounding box under the world coordinate system is determined, a pose of the target object located within the bounding box under the world coordinate system is detected, which is noted as the three-dimensional third pose information.

In addition, the second pose information of the bounding box under the world coordinate system includes a plurality of vertices, and the position and orientation of the target object under the world coordinate system are calculated based on the plurality of vertices, which serves as the third pose information.

The first pose information is two-dimensional pose information, which corresponds to the bounding box and under the image coordinate system.

The second pose information is three-dimensional pose information, which corresponds to the bounding box and under the camera coordinate system.

The third pose information is three-dimensional pose information, which corresponds to the target object and under the world coordinate system.

In the embodiments, the bounding box of the 3D object is unmapped through the bounding box of the 2D image by mapping the 3D bounding box onto the 2D image.

In the embodiments, the image data is acquired, wherein the image data includes the target object. The image data is input into the 2D detection model, and the two-dimensional first pose information of the three-dimensional bounding box in response to being projected onto the image data is detected, wherein the bounding box is configured to detect the target object. The first pose information is mapped to the three-dimensional second pose information, and the third pose information of the target object is detected based on the second pose information. By predicting the projection mapping of the bounding box on the image data, the 3D pose information is restored from the projection mapping. In this way, the jitter caused by the subtle error of predicting the rotation angle is avoided. The embodiments of the present disclosure achieve a higher accuracy and more stable effect than the direct prediction of the 3D pose information.

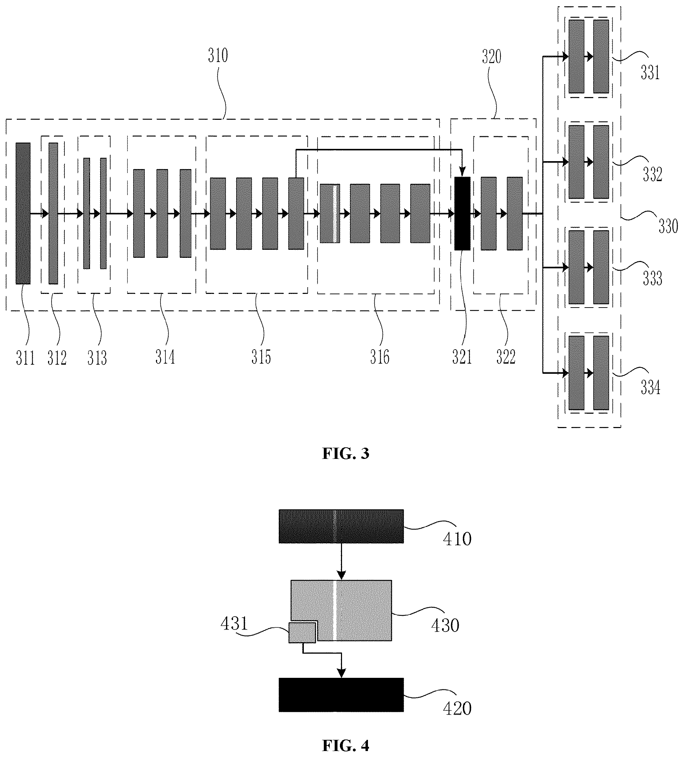

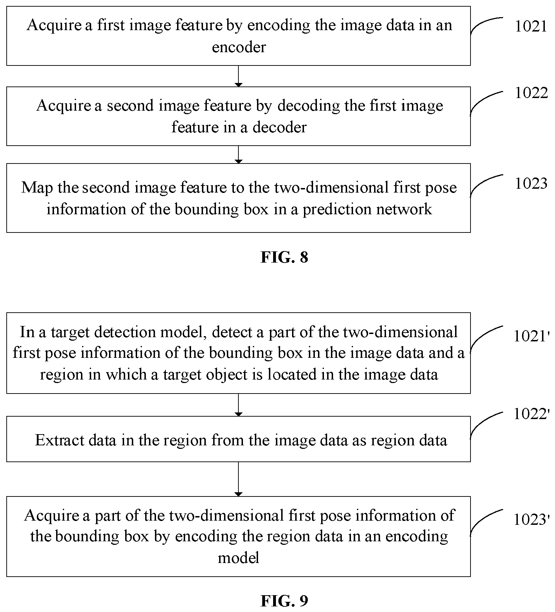

In some exemplary embodiments of the present disclosure, the two-dimensional detection model is an independent, complete network, i.e., a one-stage network. As shown in FIG. 3, the two-dimensional detection model includes an encoder 310, a decoder 320, and a prediction network 330. In the exemplary embodiments, as shown in FIG. 8, step 102 includes the following sub-steps 1021 to 1023.

In step 1021, a first image feature is acquired by encoding the image data in the encoder.

For example, the encoder reads the entire source data (i.e., the image data) as a code with a fixed length (i.e., the first image feature).

Exemplarily, as shown in FIG. 3, the encoder 310 includes a convolutional layer (Conv Layer) 311, a first residual network 312, a second residual network 313, a third residual network 314, a fourth residual network 315, and a fifth residual network 316. The first residual network 312, the second residual network 313, the third residual network 314, the fourth residual network 315, and the fifth residual network 316 all include one or more bottleneck residual blocks. The number of output channels of the bottleneck residual block is n times the number of input channels. n is a positive integer such as 4.

In the embodiments, a first level feature is acquired by performing a convolution process on the image data in a convolutional layer 311; a second level feature is acquired by processing the first level feature in a first residual network 312; a third level feature is acquired by processing the second level feature in a second residual network 313; a fourth level feature is acquired by processing the third level feature in a third residual network 314; a fifth level feature is acquired by processing the fourth level feature in a fourth residual network 315; and a sixth level feature is acquired by processing the fifth level feature in a fifth residual network 316.

In the first residual network 312, the second residual network 313, the third residual network 314, the fourth residual network 315, and the fifth residual network 316, an output of the bottleneck residual block in the current layer is an input of the bottleneck residual block in the next layer.

In the embodiments, the first level feature, the second level feature, the third level feature, the fourth level feature, the fifth level feature, and the sixth level feature are all first image features.

In some embodiments, as shown in FIG. 3, the number of bottleneck residual blocks in the first residual network 312 is less than the number of bottleneck residual blocks in the second residual network 313. For example, e.g., one layer of bottleneck residual blocks is in the first residual network 312, and two layers of bottleneck residual blocks are in the second residual network 313. The number of bottleneck residual blocks in the second residual network 313 is less than the number of bottleneck residual blocks in the third residual network 314, the number of bottleneck residual blocks in the third residual network 314 is less than the number of bottleneck residual blocks in the fourth residual network 315, and the number of bottleneck residual blocks in the fourth residual network 315 is equal to the number of bottleneck residual blocks in the fifth residual network 316. For example, two layers of bottleneck residual blocks are in the second residual network 313, three layers of bottleneck residual blocks are in the third residual network 314, four layers of bottleneck residual blocks are in the fourth residual network 315, and four layers of bottleneck residual blocks are in the fifth residual network 316.

In addition, a dimension of the second level feature is higher than a dimension of the third level feature, the dimension of the third level feature is higher than a dimension of the fourth level feature, the dimension of the fourth level feature is higher than a dimension of the fifth level feature, and the dimension of the fifth level feature is higher than a dimension of the sixth level feature. For example, the dimension of the second level feature is $320\times240\times16$, the dimension of the third level feature is $160\times120\times24$, the dimension of the fourth level feature is $80\times60\times32$, the dimension of the fifth level feature is $40\times30\times64$, and the dimension of the sixth level feature is $20\times15\times128$.

Low-resolution information of the image data after multiple down-sampling provides semantic information about the target object between contexts within the entire image data. The semantic information responds to features of the relationship between the target object and the environment of the target object, and the first image feature contributes to the detection of the target object.

In step 1022, a second image feature is acquired by decoding the first image feature in the decoder.

For example, the decoder outputs target data (i.e., the second image feature) by decoding the code (i.e., the first image feature).

Exemplarily, as shown in FIG. 3, the decoder 320 includes a transpose convolution layer 321 and a sixth residual network 322. The sixth residual network 322 includes a plurality of bottleneck residual blocks. For example, the sixth residual network 322 includes two layers of bottleneck residual blocks.

In a case where the first image feature includes a plurality of features, such as the first level feature, the second level feature, the third level feature, the fourth level feature, the fifth level feature, the sixth level feature, or the like, at least one of the features is selected for up-sampling, and the high-level semantic information is combined with the low-level semantic information, such that the richness of the speech information is improved, the stability and accuracy of the two-dimensional detection model is increased, and false-detection and miss-detection are reduced.

In the embodiments, as shown in FIG. 3, a seventh level feature is acquired by performing a convolution process on the sixth level feature data in the transpose convolutional layer 321; an eighth level feature is formed by combining the fifth level feature acquired by up-sampling with the seventh level feature, such that the combination of the high-level semantic information with the low-level semantic information is achieved; and the second image feature is acquired by processing the eighth level feature in the sixth residual network 322.

In the sixth residual network 322, an output of the bottleneck residual block in the current layer is an input of the bottleneck residual block in the next layer.

In some embodiments, a dimension of the second image feature is higher than a dimension of the sixth level feature. For example, e.g., the dimension of the second image feature is $40\times30\times64$ and the dimension of the sixth level feature is $20\times15\times128$.

In step 1023, the second image feature is mapped to the two-dimensional first pose information of the bounding box in the prediction network.

The first pose information is the two-dimensional pose information corresponding to the bounding box.

Typically, the two-dimensional detection model includes a plurality of prediction networks, and the prediction networks are branching networks that focus on a particular data in the first pose information, and are implemented as smaller structures.

Exemplarily, as shown in FIG. 3, the prediction network 330 includes a first prediction network 331, a second prediction network 332, a third prediction network 333, and a fourth prediction network 334. The first prediction network 331 includes a plurality of bottleneck residual blocks, such as two layers of bottleneck residual blocks, the second prediction network 332 includes a plurality of bottleneck residual blocks, such as two layers of bottleneck residual blocks, the third prediction network 333 includes a plurality of bottleneck residual blocks, such as two layers of bottleneck residual blocks, and the fourth prediction network 334 includes a plurality of bottleneck residual blocks, such as two layers of bottleneck residual blocks.

In the embodiments, the first pose information includes a center point, a depth, a scale, and a vertex, and the second image feature is input into the first prediction network 331, the second prediction network 332, the third prediction network 33, and the fourth prediction network 334.

For example, the scale refers to a length, a width, and a height of a real object.

A center heatmap of the bounding box is acquired by processing the second image feature in the first prediction network 331, and the center point is found in the center heatmap. The center point has a depth.

The depth of the bounding box is acquired by processing the second image feature in the second prediction network 332.

The scale of the bounding box is acquired by processing the second image feature in the third prediction network 333.

A distance at which the vertex in the bounding box is offset with respect to the center point is acquired by processing the second image feature in the fourth prediction network 334, and coordinates of the plurality of vertices are acquired by adding this offset distance to coordinates of the center point.

The number of vertices and the relative positions of the vertices in the bounding box are different with respect to different shapes of the bounding box. In a case where the bounding box is a rectangle, the bounding box is a cylinder, the bounding box has 8 vertices which are intersection points of the outer circles of the bottom and top faces; or the like.

In the embodiments, the two-dimensional detection model has a small number of layers and a simple structure, uses fewer computational resources, and the computation is low time-consuming, such that real-time performance is ensured.

In some other exemplary embodiments of the present disclosure, the two-dimensional detection model includes two mutually independent models, i.e., a two-stage network. As shown in FIG. 4, the two-dimensional detection model includes a target detection model 410 and an encoding model 420. The target detection model 410 is cascaded with the encoding model 420. That is, an output of the target detection model 410 is an input of the encoding model 420. The two-stage network has a complex structure, which avoids the situation that the prediction results cluster into a bunch on a small model, such that the two-dimensional detection model is more stable.

In the exemplary embodiments, as shown in FIG. 9, step 102 includes the following sub-steps 1021' to 1023'.

In step 1021', in the target detection model, a part of the two-dimensional first pose information of the bounding box in the image data and a region in which the target object is located in the image data are detected.

The target detection model includes one-stage and two-stage. The one-stage includes single shot multibox detector (SSD), you only look once (YOLO), or the like. The two-stage includes region with CNN features (R-CNN) series, such as R-CNN, fast-RCNN, fast-RCNN, or the like.

The image data is input into the target detection model, and the target detection model detects the part of the two-dimensional first pose information of the bounding box in the image data and the region in which the target object is located in the image data.

In some embodiments, in the target detection model, a depth and a scale of the bounding box in the image data are detected as the first pose information.

The description is given using a scenario where YOLOv5 is the target detection model as an example. YOLOv5 is divided into three parts: a backbone network, a feature pyramid network, and a branch network. The backbone network refers to a convolutional neural network that aggregates at different fine-grained levels and forms image features. The feature pyramid network refers to a series of network layers that mix and combine the image features, and subsequently transmits the image features to a prediction layer, which is generally a feature pyramid network (FPN) or a path aggregation network (PANet). The branch network refers to the prediction of the image features, generating the bounding boxes, and predicting the class of the target object, the depth and the scale of the target object. Thus, the output of YOLOv5 is nc+5+3+1.

nc represents the number of classes of the objects.

The number 5 indicates the presence of 5 variables, including a total of 5 variables, namely classification confidence (c), the center point of the bounding box (x,y), and the width and height of the bounding box (w, h).

The number 3 indicates the presence of 3 variables, including the scales of the target object in 3D space (length, width, and height).

The number 1 indicates the presence of 1 variable, namely the depth of the target object in the camera coordinate system, i.e., the distance between the object and the camera when shooting.

In step 1022', data in the region is extracted from the image data as region data.

As shown in FIG. 4, the region in which the target object is located in the image data 430 belongs to the two-dimensional bounding box. Based on the region, the image data is cropped and the data (pixel points) in the region is extracted and denoted as the region data 431, such that the scaling of the image data is achieved.

In step 1023', a part of the two-dimensional first pose information of the bounding box is acquired by encoding the region data in the encoding model.

As shown in FIG. 4, the region data 431 is input into the encoding model 420 for encoding, and the remaining two-dimensional first pose information of the bounding box is output.

In some embodiments, the region data is encoded in the encoding model, and the center point and vertex of the bounding box are acquired as the first pose information.

The collection of a part of the first pose information detected by the target detecting module and another part of the first pose information generated by the encoding module is identified as the first pose information detected by the 2D detection model.

Considering less computational resources of the mobile terminal, the encoding model is usually chosen to be simple in structure and have less computational amount. The description is given using a scenario where efficientnet-lite0 is the encoding model as an example. The efficientnet-lite0 includes a plurality of $1\times1$ convolutional layers, a plurality of depth-separable convolutional layers, a plurality of residual connection layers, and a plurality of fully-connected layers. The last fully-connected layer predicts the center point and vertex of the target object.

In addition to the efficientnet-lite0, a lightweight network structure with fewer parameters or stronger expressiveness is used as the encoding model.

In the embodiments, a suitable 2D detection model is selected according to the needs of the service scenario. In a case where a user uploads video data, the one-stage network is faster and the two-stage network is more accurate. In a case where a user films in real time, the two-stage network adds the tracking of the 2D detector (tracking, for example, is to, based on positional information of a first frame, capture possible position information of a next frame), such that there is no need detect each frame of image data, and thus the speed and accuracy are faster and higher.

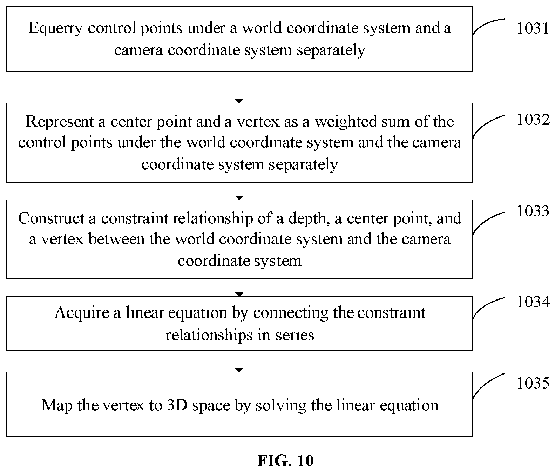

In some other exemplary embodiments of the present disclosure, as shown in FIG. 10, step 103 includes the following sub-steps 1031 to 1034.

In step 1031, control points are queried under the world coordinate system and the camera coordinate system separately.

The EPnP algorithm introduces the control points, and any one of references points, such as a vertex or a center point, is represented as a linear combination of four control points.

Generally, the control points are chosen randomly. In some embodiments of the present disclosure, points with better effects are selected as the control points in advance by experiments, coordinates of the control points are recorded, and the control points are loaded as hyper-parameters in use.

In step 1032, the center point and the vertex are represented as a weighted sum of the control points under the world coordinate system and the camera coordinate system separately.

A superscript w is defined as the world coordinate system, a superscript c is defined as the camera coordinate system, $P_i^w$ (i=1, 2,..., n) is defined as coordinates of the i$^{th}$ reference point (a vertex, a center point) under the world coordinate system, $P_i^c$ (i=1, 2,..., n) is defined as coordinates of the i$^{th}$ reference point (a vertex, a center point) projected to the camera coordinate system, $C_j^w$ (j=1, 2, 3, 4) are coordinates of the four control points under the world coordinate system, and $C_j^c$ (j=1, 2, 3, 4) are coordinates of the four control points projected to the camera coordinate system.

Reference points in the world coordinate system are represented by four control points:

$$P_i^w = \sum_{j=1}^{4} a_{ij} C_j^w , \quad \sum_{j=1}^{4} a_{ij} = 1$$

$a_{ij}$ represents homogeneous barycentric coordinates, also known as weight, belonging to the hyperparameter, configured for the control points.

Reference points in the camera coordinate system are represented by four control points:

$$P_i^c = \sum_{j=1}^{4} a_{ij} C_j^c , \quad \sum_{j=1}^{4} a_{ij} = 1$$

$a_{ij}$ represents homogeneous barycentric coordinates, also known as weights, configured for the control point.

For the same reference point, the weight under the world coordinate system is the same as the weight under the camera coordinate system, both being to the hyperparameter.

In step 1033, a constraint relationship of a depth, a center point, and a vertex between the world coordinate system and the camera coordinate system is constructed.

The constraint relationship referred to herein is a constraint relationship between the depth, the center point, and the vertex under the world coordinate system, and the depth, the center point, and the vertex under the camera coordinate system.

According to a projection equation, the constraint relationship between the coordinates of the reference point (the vertex, the center point) in the world coordinate system and the reference point (the vertex, the center point) in the camera coordinate system is acquired.

The projection equation is as follows:

$$w_i \begin{bmatrix} u_i \\ v_i \\ 1 \end{bmatrix} = A P_i^c = A \sum_{j=1}^{4} a_{ij} C_j^c = \begin{bmatrix} f_u & 0 & u_c \\ 0 & f_v & u_v \\ 0 & 0 & 1 \end{bmatrix} a_{ij} \begin{bmatrix} x_j^c \\ y_j^c \\ z_j^c \end{bmatrix}$$

$w_i$ represents the depth of the reference point (the vertex, the center point). $u_i$ and $v_i$ represent the x-coordinate and y-coordinate of the reference point (the vertex, the center point) in the camera coordinate system. A represents the hyperparameter. $f_u$, $f_v$, $u_c$, and $u_v$ represent internal parameters of the camera. $x_j^c$, $y_j^c$, and $z_j^c$ represent the x-coordinate, y-coordinate, and z-coordinate of the reference point (the vertex, the center point) in the world coordinate system. There are a total of 12 unknown variables, which are brought into the equation for solution.

The sum of the weights $a_{ij}$ of the control points, which is 1, is brought into the constraint relationship. The constraint relationship for each reference point (the vertex, the center point) is converted to:

$$\sum_{j=1}^{4} a_{ij} f_u x_j^c + a_{ij}(u_c - u_i) z_j^c = 0$$

$$\sum_{j=1}^{4} a_{ij} f_v y_j^c + a_{ij}(v_c - v_i) z_j^c = 0$$

In step 1034, a linear equation is acquired by connecting the constraint relationships in series.

There are two constraint relationships for each reference point, and connecting the constraint relationships is characterized as forming a matrix of the constraint relationships of the nine reference points, connecting rowwise in series.

In step 1035, the vertex is mapped to the 3D space by solving the linear equation.

In a case where there are n reference points (vertices, center points), n being a positive integer such as 9, a following homogeneous linear equation is acquired by connecting the constraint relationships of the n reference points in series:

$$Mx = 0$$

$x = c_1^{cT}, c_2^{cT}, c_3^{cT}, c_4^{cT}$. x represents coordinates (X, Y, Z) of the control point under the camera coordinate system, which is a 12-dimensional vector. There are a total of 12 unknown variables for the four control points, and M is a 2n×12 matrix.

Therefore, x belongs to nullspace of M. $v_i$ represents a right singular vector of the matrix M, and a corresponding singular value of $v_i$ is 0, which is acquired by solving for a nullspace eigenvalue of the $M^TM$:

$$x = \sum_{i=1}^{N} \beta_i v_i$$

The solution is to solve for an eigenvalue and an eigenvector of the $M^TM$, and an eigenvector with an eigenvalue of 0 is $v_i$. The size of $M^TM$ is $12 \times 12$ regardless of the number of reference points. The complexity of computing the $M^TM$ is O(n), thus the overall complexity of the algorithm is O(n).

N is related to the number of reference points, control points, camera focal lengths, and noise. $\beta_i$ represents a linear combination, a deterministic solution of which is acquired by either directly optimizing the solution when setting the number of N or by using an approximate solution.

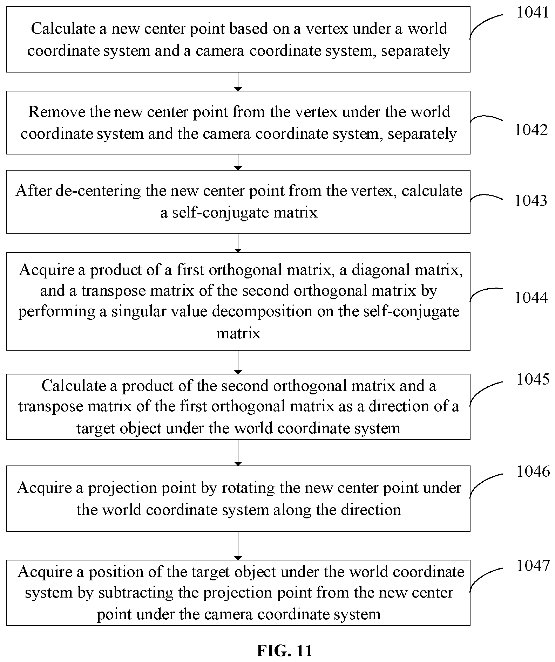

In some other exemplary embodiments of the present disclosure, the third pose information is acquired by performing a singular value solution on the second pose information. In the exemplary embodiments, as shown in FIG. 11, step 104 includes sub-steps 1041 to 1047 as follows.

In step 1041, a new center point based on the vertex is calculated under the world coordinate system and the camera coordinate system, separately.

For a bounding box in the shape of a rectangle, cylinder, or the like, a coordinate system is generally established based on a center point, which is then an origin point of the bounding box.

Exemplarily, an average of the vertices is calculated under the camera coordinate system as the new center point, denoted as:

$$p_c^c = \frac{\sum p_i^c}{N}$$

$p_c^c$ represents the new center point under the camera coordinate system, $p_i^c$ represents the vertex under the camera coordinate system, N represents the number of vertices, and i represents an integer.

An average of the vertices is calculated under the world coordinate system as the new center point, denoted as:

$$p_c^w = \frac{\sum p_i^w}{N}$$

$p_c^w$ represents the new center point under the world coordinate system, $p_i^w$ represents the vertex under the world coordinate system, and N represents the number of vertices.

In step 1042, the new center point is removed from the vertex under the world coordinate system and the camera coordinate system, separately.

De-centering, i.e., removing the new center points, is achieved by subtracting the new center points from the plurality of vertices under the camera coordinate system, respectively, which is denoted as:

$$q_i^c = p_i^c - p_c^c$$

$q_i^c$ represents the vertex after decentering under the camera coordinate system, $p_i^c$ represents the vertex under the camera coordinate system, and $p_c^c$ represents the new center point under the camera coordinate system.

De-centering, i.e., removing the new center point, is achieved by subtracting the new center points from the plurality of vertices under the world coordinate system, respectively, which is noted as:

$$q_i^w = p_i^w - p_c^w$$

$q_i^w$ represents the vertex after decentering under the world coordinate system, $p_i^w$ represents the vertex under the world coordinate system, and $p_c^w$ represents the new center point under the world coordinate system.

In step 1043, after de-centering the new center point from the vertex, a self-conjugate matrix is calculated.

After the de-centering is completed, the self-conjugate matrix H is calculated. The self-conjugate matrix H is a product of the vertices under the camera coordinate system and a transpose matrix of the vertices under the world coordinate system, represented as follows:

$$H = \sum_i^N q_i^c q_i^{wT}$$

N represents the number of vertices, $q_i^c$ represents the vertices after decentering under the camera coordinate system, $q_i^w$ represents the vertices after decentering under the world coordinate system, and T represents the transpose matrix.

In step 1044, a product of a first orthogonal matrix, a diagonal matrix, and a transpose matrix of the second orthogonal matrix is acquired by performing a singular value decomposition on the self-conjugate matrix.

In the embodiments, there are two coordinate systems under which the coordinates are known, i.e., the coordinates of the vertices under the world coordinate system and the coordinates of the vertices under the camera coordinate system. The pose transformation of the two coordinate systems is acquired by utilizing the singular value decomposition (SVD), i.e., performing the SVD on the self-conjugate matrix H, represented as:

$$H = U\Lambda V^T$$

*U* represents the first orthogonal matrix, A represents the diagonal matrix, *V* represents the second orthogonal matrix, and *T* represents the transpose matrix.

In step 1045, a product of the second orthogonal matrix and a transpose matrix of the first orthogonal matrix is calculated as a direction of the target object under the world coordinate system.

$X = VU^T$ is calculated, wherein *U* represents the first orthogonal matrix, *V* represents the second orthogonal matrix, and *T* represents the transpose matrix.

In some cases, R=X, wherein R represents the direction of the target object under the world coordinate system.

In step 1046, a projection point is acquired by rotating the new center point under the world coordinate system along the direction.

In step 1047, a position of the target object under the world coordinate system is acquired by subtracting the projection point from the new center point under the camera coordinate system.

The position of the target object under the world coordinate system is acquired by subtracting the new center point under the world coordinate system after being rotated along the direction from the new center point under the camera coordinate system, represented as follows:

$$t = p_c^c - R p_c^w$$

$t$ represents the position of the target object under the world coordinate system, $p_c^c$ represents the new center point under the camera coordinate system, $R$ represents the direction of the target object under the world coordinate system, and $p_c^w$ represents the new center point under the world coordinate system.

Another embodiment

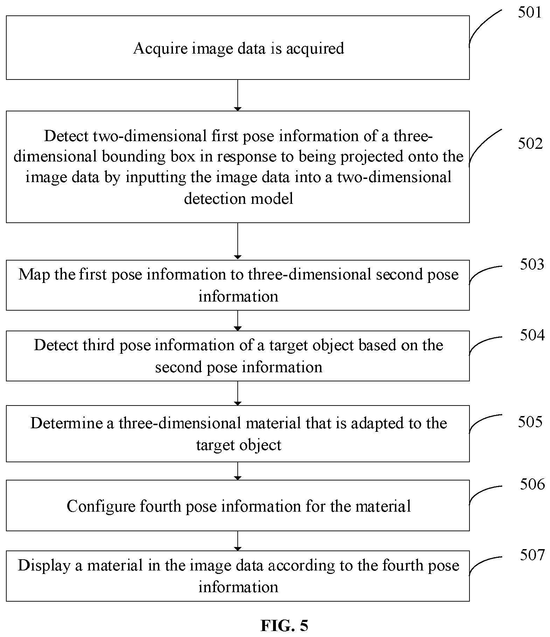

FIG. 5 is a flowchart of a method of detecting object poses according to some embodiments embodiment of the present disclosure. In the embodiments of the present disclosure, the operation of special effect processing is added based on the above embodiments, and the method includes the following steps.

In step 501, image data is acquired.

The image data includes a target object.

In step 502, two-dimensional first pose information of a three-dimensional bounding box in response to being projected onto the image data is detected by inputting the image data into a two-dimensional detection model.

The bounding box is configured to detect the target object.

In step 503, the first pose information is mapped to three-dimensional second pose information.

In step 504, third pose information of the target object is detected based on the second pose information.

In step 505, a three-dimensional material that is adapted to the target object is determined.

In the embodiments, a service terminal, such as a server, collects the three-dimensional material that is adapted to the type of the target object in advance according to the requirements of the service scenario. The mobile terminal downloads the material from the server to the local area in advance according to certain rules (e.g., selecting basic materials or hot materials), or downloads a specified material from the server to the local area according to an operation triggered by a user at use. Alternatively, the user selects the three-dimensional material adapted to the target object form the local area of the mobile terminal, or extracts a part of the data corresponding to the target object, performs 3D conversion on the part of data, and determines the acquired 3D data as the material.

For example, the material is text data, image data, animation data, or the like.

For example, as shown in FIG. 2, in a case where the target object 201 is a beverage of a certain brand, a logo 203 of this brand is used as the material.

For example, in a case where the target object is a ball (e.g., a soccer ball, a basketball, a volleyball, a badminton ball, a ping-pong ball, or the like), a special effect animation (e.g., a feather, a lightning bolt, a flame, or the like) adapted to the ball is used as the material.

Further, in a case where the target object is a container holding water, aquatic plants and animals (e.g., water plants, fish, shrimp, or the like) are used as the material.

In step 506, fourth pose information is configured for the material.

The fourth pose information is adapted to the first pose information and/or the third pose information.

In step 507, the material is displayed in the image data according to the fourth pose information.

In the embodiments, a special effect generator is predefined. The fourth pose information for the material is generated by inputting the first pose information and/or the third pose information into the special effect generator. The material is rendered in the image data according to the fourth pose information, such that the material is made to conform to the situation of the target object, and thus a more natural special effect is generated.

Exemplarily, a part of the first pose information includes a scale of the bounding box, and the third pose information includes a direction and a position of the target object.

In the embodiments, the position of the target object is offset outward by a specified distance, for example, by 10 centimeters with a front side of the target object as a reference surface, and the offset position is used as a position of the material.

The fourth pose information includes the position of the material.

The scale of the bounding box is reduced to a specified percentage (e.g., 10%), and the reduced scale is used as a scale of the material.

The fourth pose information includes the scale of the material.

The direction of the target object is configured as the direction of the material, such that the material faces the same direction as the target object.

The fourth pose information includes the direction of the material.

The above fourth pose information is only as an example, and other fourth pose information is set according to the actual situation when implementing the embodiments of the present disclosure. For example, the scale of the bounding box is enlarged to a specified ratio (e.g., 1.5 times), and the enlarged scale is used as the scale of the material; or the direction of the target object is rotated by a specified angle (e.g., 90°), and the rotated direction is used as the direction of the material. Furthermore, in addition to the fourth pose information described above, other fourth pose information may be employed by those skilled in the art according to practical needs.

For video data, after the addition of special effects to the adapted data is finished, a user posts the adapted data, such as a short video, live data, or the like.

For the method embodiments, for the simplicity of description, the embodiments are expressed as a series of combinations of actions. However, it should be noted by those skilled in the art that there are various sequences of actions, because according to the embodiments of the present application, some of the steps may be performed in other sequences or at the same time.

Second embodiment

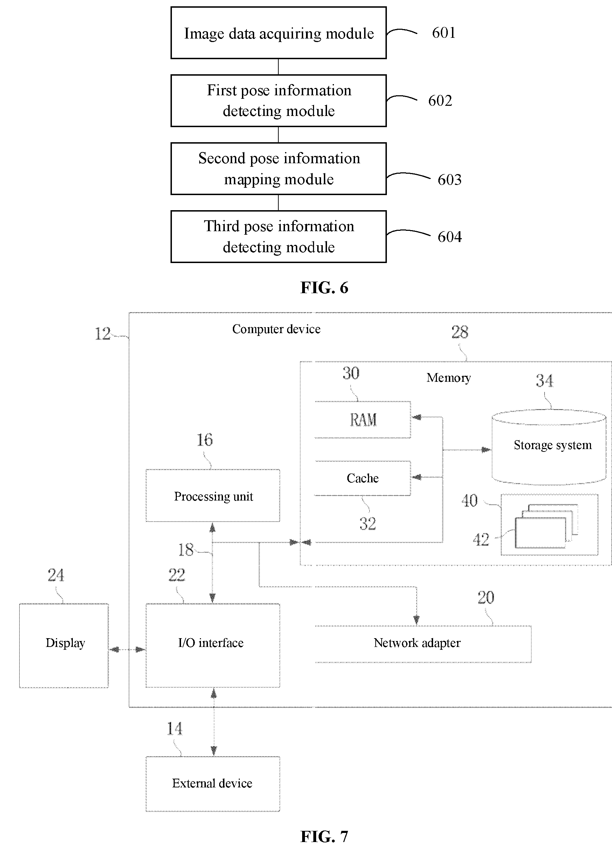

FIG. 6 is a structural block diagram of an apparatus for detecting object poses according to some embodiments of the present disclosure.

The apparatus for detecting object poses includes: an image data acquiring module 601, configured to acquire image data, wherein the image data includes a target object; a first pose information detecting module 602, configured to detect two-dimensional first pose information of a three-dimensional bounding box in response to being projected onto the image data by inputting the image data into a two-dimensional detection model, wherein the bounding box is configured to detect the target object; a second pose information mapping module 603, configured to map the two-dimensional first pose information to three-dimensional second pose information; and a third pose information detecting module 604, configured to detect third pose information of the target object based on the three-dimensional second pose information.

In some embodiments of the present disclosure, the two-dimensional detection model includes an encoder, a decoder, and a prediction network.

The first pose information detecting module 602 includes: an encoding module, configured to acquire a first image feature by encoding the image data in the encoder; a decoding module, configured to acquire a second image feature by decoding the first image feature in the decoder; and a mapping module, configured to map, in the prediction network, the second image feature to the two-dimensional first pose information of the bounding box.

In some embodiments of the present disclosure, the encoder includes a convolutional layer, a first residual network, a second residual network, a third residual network, a fourth residual network, and a fifth residual network. Each of the first residual network, the second residual network, the third residual network, the fourth residual network, and the fifth residual network includes at least one bottleneck residual block.

The encoding module is further configured to: acquire a first level feature by performing a convolution process on the image data in the convolutional layer; acquire a second level feature by processing the first level feature in the first residual network; acquire a third level feature by processing the second level feature in the second residual network; acquire a fourth level feature by processing the third level feature in the third residual network; acquire a fifth level feature by processing the fourth level feature in the fourth residual network; and acquire a sixth level feature by processing the fifth level feature in the fifth residual network.

In some embodiments of the present disclosure, the number of bottleneck residual blocks in the first residual network is less than the number of bottleneck residual blocks in the second residual network, the number of bottleneck residual blocks in the second residual network is less than the number of bottleneck residual blocks in the third residual network, the number of bottleneck residual blocks in the third residual network is less than the number of bottleneck residual blocks in the fourth residual network, and the number of bottleneck residual blocks in the fourth residual network is equal to the number of bottleneck residual blocks in the fifth residual network.

A dimension of the second level feature is higher than a dimension of the third level feature, the dimension of the third level feature is higher than a dimension of the fourth level feature, the dimension of the fourth level feature is higher than a dimension of the fifth level feature, and the dimension of the fifth level feature is higher than a dimension of the sixth level feature.

In some embodiments of the present disclosure, the decoder includes a transpose convolutional layer, a sixth residual network. The sixth residual network includes a plurality of bottleneck residual blocks.

The decoding module is further configured to: acquire a seventh level feature by performing a convolution process on the sixth level feature data in the transpose convolutional layer; form an eighth level feature by combining the fifth level feature with the seventh level feature; and acquire the second image feature by processing the eighth level feature in the sixth residual network.

In some embodiments of the present disclosure, a dimension of the second image feature is higher than the dimension of the sixth level feature.

In some embodiments of the present disclosure, the prediction network includes a first prediction network, a second prediction network, a third prediction network, and a fourth prediction network. Each of the first prediction network, the second prediction network, the third prediction network, and the fourth prediction network includes a plurality of bottleneck residual blocks.

The mapping module is further configured to: acquire a center point of the bounding box by processing the second image feature in the first prediction network; acquire a depth of the bounding box by processing the second image feature in the second prediction network; acquire a scale of the bounding box by processing the second image feature in the third prediction network; and acquire a distance at which a vertex in the bounding box offsets relative to the center point by processing the second image feature in the fourth prediction network.

In some other embodiments of the present disclosure, the two-dimensional detection model includes a target detection model and an encoding model. The target detection model and the encoding model are cascaded.

The first pose information detecting module 602 includes: a target detecting module, configured to detect, in the target detection model, a part of the two-dimensional first pose information of the bounding box in the image data and a region in which the target object is located in the image data; and a region data extracting module, configured to extract data in the region in the image data as region data; and the region data encoding module is further configured to acquire the part of the two-dimensional first pose information of the bounding box by encoding the region data in the encoding model.

In some embodiments of the present disclosure, the target detecting module is further configured to: detect the depth and the scale of the bounding box in the image data in the target detection model.

The region data encoding module is further configured to: acquire the center point and vertex of the bounding box by encoding the region data in the encoding model.

In some embodiments of the present disclosure, the first pose information includes the center point, the vertex, and the depth.

The second pose information mapping module 603 includes: a control point query module, configured to query control points under a world coordinate system and a camera coordinate system, separately; a point representing module, configured to represent the center point and the vertex as a weighted sum of the control points under the world coordinate system and the camera coordinate system, separately; a constraint relationship constructing module, configured to construct a constraint relationship of the depth, the center point and the vertex between the world coordinate system and the camera coordinate system; a linear equation generating module, configured to acquire a linear equation by connecting the constraint relationships in series; and a linear equation solving module, configured to map the vertex to 3D space by solving the linear equation.

In some embodiments of the present disclosure, the third pose information detecting module 604 includes: a center point calculating module, configured to calculate a new center point based on the vertex under the world coordinate system and the camera coordinate system, separately; a center point removing module, configured to remove the new center point from the vertex under the world coordinate system and the camera coordinate system, separately; a self-conjugate matrix calculating module, configured to calculate a self-conjugate matrix, wherein the self-conjugate matrix is a product between the vertices under the camera coordinate system and a transpose matrix of the vertices under the world coordinate system; a singular value decomposing module, configured to acquire a product between a first orthogonal matrix, a diagonal matrix, and a transpose matrix of a second orthogonal matrix by performing a singular value decomposition on the self-conjugate matrix; a direction calculating module, configured to calculate a product between the second orthogonal matrix and a transpose matrix of the first orthogonal matrix as a direction of the target object under the world coordinate system; a projection point calculating module, configured to acquire a projection point by rotating the new center point under the world coordinate system along the direction; and a position calculating module, configured to acquire a position of the target object under the world coordinate system by subtracting the projection point from the new center point under the camera coordinate system.

In some embodiments of the present disclosure, the apparatus further includes: a material determining module, configured to determine a three-dimensional material adapted to the target object; a fourth pose information configuring module, configured to configure fourth pose information for the material, wherein the fourth pose information is pose information adapted to the first pose information and the third pose information; and a material display module, configured to display the material in the image data according to the fourth pose information.

In some embodiments of the present disclosure, the first pose information includes the scale of the bounding box, and the third pose information includes the direction and the position of the target object.

The fourth pose information configuring module includes: a position offsetting module, configured to offset the position of the target object by a specified distance and use the offset position as a position of the material; a scale reducing module, configured to reduce the scale of the bounding box to a specified scale and use the reduced scale as a scale of the material; and a direction configuring module, configured to configure the direction of the target object as a direction of the material.

The apparatus for detecting object poses according to some embodiments of the present disclosure may perform the method for detecting object poses provided according to any of the embodiments of the present disclosure, and has the functional modules and beneficial effects corresponding to performing the method.

Third embodiment

FIG. 7 is a schematic structural diagram of a computer device according to some embodiments of the present disclosure. FIG. 7 illustrates a block diagram of an exemplary computer device 12 applicable to realizing the embodiments of the present disclosure. The computer device 12 shown in FIG. 7 is merely an example.

As shown in FIG. 7, the computing device 12 is represented in the form of a general computing device. Components of the computer device 12 may include one or more processors or processing units 16, a system memory 28, and a bus 18 connecting different system components. The different system components include the system memory 28 and the processing units 16.

The system memory 28 may also be noted as a memory.

The bus 18 represents one or more of a plurality of types of bus architectures, including memory buses or memory controllers, peripheral buses, accelerated graphics ports, processors, or local area buses using any of the plurality of bus architectures. For example, these architectures include an industry standard architecture (ISA) bus, a micro channel architecture (MCA) bus, an enhanced ISA bus, a video electronics standards association (VESA) bus, and a peripheral component interconnect (PCI) bus.

The computer device 12 typically includes a plurality of computer system readable media. These media may be any available media that can be accessed by the computer device 12, including transitory and non-transitory media, removable and non-removable media.

The system memory 28 may include the computer system readable medium in the form of transitory memory, such as a random access memory (RAM) 30 and/or cache 32. The computer device 12 may include other removable/non-removable, transitory/non-transitory computer system storage media. For example, the storage system 34 is configured to read and write non-removable, non-transitory magnetic media (not shown in FIG. 7). Although not shown in FIG. 7, a disk drive for reading and writing a removable, non-volatile disk (e.g., a floppy disk) is provided, and an optical disk drive for reading and writing a removable, non-volatile optical disk (e.g., a CD-ROM, a DVD-ROM, or other optical media) is provided. In these embodiments, each drive may be connected to the bus 18 via one or more data media interfaces. The system memory 28 may include at least one program product. The program product includes a set (e.g., at least one) of program modules. The program modules are configured to perform the functions of multiple embodiments of the present disclosure.

A program/utility 40 having a set (at least one) of program modules 42 may be stored in, for example, the system memory 28, such that the program modules 42 include an operating system, one or more applications, other program modules, and program data. Each of these examples, or some combination thereof, may include implementations of network environments. The program module 42 typically performs the functions and/or methods of the embodiments described in this application.

The computer device 12 may also be in communication with one or more external devices 14 (e.g., a keyboard, a pointing device, a display 24, or the like), and may also be in communication with one or more devices that enable a user to interact with the computer device 12, and/or with any device that enables the computer device 12 to be in communication with one or more other computing devices (e.g., a network card, a modem, or the like). Such communication may be performed via an input/output (I/O) interface 22. Moreover, the computer device 12 may also be in communication with one or more networks, such as a local area network (LAN), a wide area network (WAN), and/or a public network, the public network being, for example, the Internet, via a network adapter 20. As shown in FIG. 7, the network adapter 20 is in communication with other modules of the computer device 12 via the bus 18. Other hardware and/or software modules may also be used in conjunction with the computer device 12. The other hardware and/or software modules include microcode, device drivers, redundant processing units, external disk drive arrays, redundant arrays of independent disks (RAID) systems, tape drives, and data backup storage systems.

The processing unit 16 performs a variety of functional applications as well as data processing by running a program stored in the system memory 28, for example, to perform the method of detecting object poses according to some embodiments of the present disclosure.

Fourth embodiment

Some other embodiments of the present disclosure further provide a computer-readable storage medium. The computer-readable storage medium stores a computer program therein. The computer program, when loaded and run by a processor, causes the processor to perform a plurality of processes of the method for detecting object poses described above, which is capable of achieving the same technical effect and is not repeated herein.

The computer-readable storage medium may, for example, include a system, apparatus, or device of electricity, magnetism, light, electromagnetism, infrared, or semiconductors, or a combination thereof. The computer-readable storage medium is, for example, an electrical connection with one or more wires, a portable computer disk, a hard disk, a random access memory (RAM), a read-only memory (ROM), an erasable programmable read-only memory (EPROM EPROM), a flash memory, an optical fiber, a portable compact disk read-only memory (CD-ROM), an optical storage device, a magnetic storage device, or any suitable combination thereof. The computer-readable storage medium herein may be any tangible medium containing or storing a program that may be used by or in combination with an instruction execution system, an apparatus, or a device.

**Claims**

1. A method for detecting object poses, carried out by a computer, and comprising:

    acquiring (101, 501) image data, wherein the image data comprises a target object;
    detecting (102, 502) two-dimensional first pose information of a three-dimensional bounding box in response to being projected onto the image data by inputting the image data into a two-dimensional detection model, wherein the first pose information comprises a center point of the bounding box, eight vertices of the bounding box, and a depth of the bounding box, and the bounding box is configured to describe a pose of the target object in 3D space;
    mapping (103, 503) the two-dimensional first pose information to three-dimensional second pose information of the bounding box, comprising: querying (1031) control points under a world coordinate system and a camera coordinate system, separately; representing (1032) the center point and each of the vertices as a weighted sum of four control points under the world coordinate system and the camera coordinate system, separately; constructing (1033) a constraint relationship of the depth, the center point and each vertex between the world coordinate system and the camera coordinate system; acquiring (1034) a linear equation by connecting the constraint relationships in series, wherein unknown variables of the linear equation are twelve coordinates of the four 3D control points in the camera coordinate system; and mapping (1035) each vertex to 3D space by solving the linear equation; and
    detecting (104, 504) third pose information of the target object based on the three-dimensional second pose information, comprising: calculating (1041) a new center point based on the vertices under a world coordinate system and a camera coordinate system, separately; removing (1042) the new center point from each vertex under the world coordinate system and the camera coordinate system, separately; calculating (1043) a self-conjugate matrix, wherein the self-conjugate matrix is a product between vertices under the camera coordinate system and a transpose matrix of vertices under the world coordinate system; acquiring (1044) a product between a first orthogonal matrix, a diagonal matrix, and a transpose matrix of a second orthogonal matrix by performing a singular value decomposition on the self-conjugate matrix; calculating (1045) a product between the second orthogonal matrix and a transpose matrix of the first orthogonal matrix as a direction of the target object under the world coordinate system; acquiring (1046) a projection point by rotating the new center point under the world coordinate system along the direction; and acquiring (1047) a position of the target object under the world coordinate system by subtracting the projection point from the new center point under the camera coordinate system;
    wherein the two-dimensional detection model comprises an encoder (310), a decoder (320), and a prediction network (330); the encoder (310) comprises a convolutional layer (311), a first residual network (312), a second residual network (313), a third residual network (314), a fourth residual network (315), and a fifth residual network (316), wherein each of the first residual network (312), the second residual network (313), the third residual network (314), the fourth residual network (315), and the fifth residual network (316) comprises at least one bottleneck residual block;
    detecting (102) the two-dimensional first pose information of the bounding box by inputting the image data into the two-dimensional detection model comprises:

        acquiring (1021) a first image feature by encoding the image data in the encoder, comprising: acquiring a first level feature by performing a convolution process on the image data in the convolutional layer; acquiring a second level feature by processing the first level feature in the first residual network; acquiring a third level feature by processing the second level feature in the second residual network; acquiring a fourth level feature by processing the third level feature in the third residual network; acquiring a fifth level feature by processing the fourth level feature in the fourth residual network; and acquiring a sixth level feature by processing the fifth level feature in the fifth residual network;
        acquiring (1022) a second image feature by decoding the first image feature in the decoder; and

mapping (1023), in the prediction network, the second image feature to the two-dimensional first pose information of the bounding box;

wherein the decoder (320) comprises a transpose convolutional layer (321) and a sixth residual network (322), wherein the sixth residual network (322) comprises a plurality of bottleneck residual blocks; and

acquiring (1022) the second image feature by decoding the first image feature in the decoder comprises:

acquiring a seventh level feature by performing a convolution process on the sixth level feature data in the transpose convolutional layer;

forming an eighth level feature by combining the fifth level feature with the seventh level feature; and acquiring the second image feature by processing the eighth level feature in the sixth residual network.

2. The method according to claim 1, wherein

a number of the bottleneck residual blocks in the first residual network (312) is less than a number of the bottleneck residual blocks in the second residual network (313), the number of the bottleneck residual blocks in the second residual network (313) is less than a number of the bottleneck residual blocks in the third residual network (314), the number of the bottleneck residual blocks in the third residual network (314) is less than a number of the bottleneck residual blocks in the fourth residual network (315), and the number of the bottleneck residual blocks in the fourth residual network (315) is equal to a number of the bottleneck residual blocks in the fifth residual network (316); and

a dimension of the second level feature is higher than a dimension of the third level feature, the dimension of the third level feature is higher than a dimension of the fourth level feature, the dimension of the fourth level feature is higher than a dimension of the fifth level feature, and the dimension of the fifth level feature is higher than a dimension of the sixth level feature.

3. The method according to claim 1, wherein a dimension of the second image feature is higher than a dimension of the sixth level feature.

4. The method according to claim 1, wherein

the prediction network (330) comprises a first prediction network (331), a second prediction network (332), a third prediction network (333), and a fourth prediction network (334), wherein each of the first prediction network (331), the second prediction network (332), the third prediction network (333), and the fourth prediction network (334) each comprises a plurality of bottleneck residual blocks; and

mapping (1023), in the prediction network, the second image feature to the two-dimensional first pose information of the bounding box comprises:

acquiring a center point of the bounding box by processing the second image feature in the first prediction network;

acquiring a depth of the bounding box by processing the second image feature in the second prediction network;

acquiring a scale of the bounding box by processing the second image feature in the third prediction network; and

acquiring a distance in which a vertex in the bounding box offsets with respect to the center point by processing the second image feature in the fourth prediction network.

5. The method according to any one of claims 1 to 4, further comprising:

determining (505) a three-dimensional material adapted to the target object;

configuring (506) fourth pose information for the material, wherein the fourth pose information is pose information adapted to the first pose information and the third pose information; and

displaying (507) the material in the image data according to the fourth pose information;

wherein the first pose information comprises a scale of the bounding box, and the third pose information comprises a direction and a position of the target object; and

configuring (506) the fourth pose information for the material comprises:

offsetting the position of the target object by a specified distance and using the offset position as a position of the material;

reducing the scale of the bounding box to a specified scale and using the reduced scale as a scale of the material; and

configuring the direction of the target object as a direction of the material.

6. An apparatus for detecting object poses, comprising:

an image data acquiring module (601), configured to acquire (101, 501) image data, wherein the image data (430) comprises a target object (201);

a first pose information detecting module (602), configured to detect (102, 502) two-dimensional first pose information of a three-dimensional bounding box in response to being projected onto the image data by inputting the image data into a two-dimensional detection model, wherein the first pose information comprises a center point of the bounding box, eight vertices of the bounding box, and a depth of the bounding box, and the bounding box is configured to describe a pose of the target object (201) in 3D space;

a second pose information mapping module (603), configured to map (103, 503) the two-dimensional first pose information into three-dimensional second pose information of the bounding box; and

a third pose information detecting module (604), configured to detect (104, 504) third pose information of the target object based on the three-dimensional second pose information;

wherein the second pose information mapping module (603) comprises a control point query module, configured to query control points under a world coordinate system and a camera coordinate system, separately; a point representing module, configured to represent the center point and each of the vertices as a weighted sum of the control points under the world coordinate system and the camera coordinate system, separately; a constraint relationship constructing module, configured to construct a constraint relationship of the depth, the center point and each vertex between the world coordinate system and the camera coordinate system; a linear equation generating module, configured to acquire a linear equation by connecting the constraint relationships in series wherein unknown variables of the linear equation are twelve coordinates of the four 3D control points in the camera coordinate system; and a linear equation solving module, configured to map each vertex to 3D space by solving the linear equation;

the third pose information detecting module (604) comprises a center point calculating module, configured to calculate a new center point based on the vertices under the world coordinate system and the camera coordinate system, separately; a center point removing module, configured to remove the new center point from each vertex under the world coordinate system and the camera coordinate system, separately; a self-conjugate matrix calculating module, configured to calculate a self-conjugate matrix, wherein the self-conjugate matrix is a product between the vertices under the camera coordinate system and a transpose matrix of the vertices under the world coordinate system; a singular value decomposing module, configured to acquire a product between a first orthogonal matrix, a diagonal matrix, and a transpose matrix of a second orthogonal matrix by performing a singular value decomposition on the self-conjugate matrix; a direction calculating module, configured to calculate a product between the second orthogonal matrix and a transpose matrix of the first orthogonal matrix as a direction of the target object under the world coordinate system; a projection point calculating module, configured to acquire a projection point by rotating the new center point under the world coordinate system along the direction; and a position calculating module, configured to acquire a position of the target object under the world coordinate system by subtracting the projection point from the new center point under the camera coordinate system;

the two-dimensional detection model comprises an encoder (310), a decoder (320), and a prediction network (330); the encoder (310) comprises a convolutional layer (311), a first residual network (312), a second residual network (313), a third residual network (314), a fourth residual network (315), and a fifth residual network (316), wherein each of the first residual network (312), the second residual network (313), the third residual network (314), the fourth residual network (315), and the fifth residual network (316) comprises at least one bottleneck residual block; and

the first pose information detecting module (602) comprises: an encoding module, configured to acquire a first image feature by encoding the image data in the encoder, acquire a first level feature by performing a convolution process on the image data in the convolutional layer; acquire a second level feature by processing the first level feature in the first residual network; acquire a third level feature by processing the second level feature in the second residual network; acquire a fourth level feature by processing the third level feature in the third residual network; acquire a fifth level feature by processing the fourth level feature in the fourth residual network; and acquire a sixth level feature by processing the fifth level feature in the fifth residual network; a decoding module, configured to acquire a second image feature by decoding the first image feature in the decoder; and a mapping module, configured to map, in the prediction network, the second image feature to the two-dimensional first pose information of the bounding box;
wherein the decoder (320) comprises a transpose convolutional layer (321) and a sixth residual network (322), wherein the sixth residual network (322) comprises a plurality of bottleneck residual blocks; and the decoding module is further configured to: acquire a seventh level feature by performing a convolution process on the sixth level feature data in the transpose convolutional layer; form an eighth level feature by combining the fifth level feature with the seventh level feature; and acquire the second image feature by processing the eighth level feature in the sixth residual network.

7. A computer device for detecting object poses, comprising:

at least one processor;
a memory, configured to store at least one program therein;
wherein the at least one processor, when loading and running the at least one program, is caused to perform the method for detecting object poses as defined in any one of claims 1 to 5.

8. A computer-readable storage medium, storing at least one computer program therein, wherein the at least one computer program, when loaded and run by a processor, causes the processor to perform the method for detecting object poses as defined in any one of claims 1 to 5.

**Patentansprüche**

1. Verfahren zur Erkennung von Objektposen, das durch einen Computer ausgeführt wird und Folgendes umfasst:

Erfassen (101, 501) von Bilddaten, wobei die Bilddaten ein Zielobjekt umfassen;
Erkennen (102, 502) zweidimensionaler erster Poseinformationen einer dreidimensionalen Begrenzungsbox als Reaktion auf deren Projektion auf die Bilddaten, indem die Bilddaten in ein zweidimensionales Detektionsmodell eingegeben werden, wobei die ersten Poseinformationen einen Mittelpunkt der Begrenzungsbox, acht Eckpunkte der Begrenzungsbox und eine Tiefe der Begrenzungsbox umfassen, und die Begrenzungsbox ausgebildet ist, eine Objektpose des Zielobjekts in einem 3D-Raum zu beschreiben;
Abbilden (103, 503) der zweidimensionalen ersten Poseinformationen auf dreidimensionale zweite Poseinformationen der Begrenzungsbox, umfassend:

Abfragen (1031) von Kontrollpunkten unter einem Weltkoordinatensystem und einem Kamerakoordinatensystem, jeweils separat;
Darstellen (1032) des Mittelpunkts und jedes der Eckpunkte als eine gewichtete Summe von vier Kontrollpunkten unter dem Weltkoordinatensystem und dem Kamerakoordinatensystem, jeweils separat;
Konstruieren (1033) einer Randbedingungsbeziehung der Tiefe, des Mittelpunkts und jedes Eckpunkts zwischen dem Weltkoordinatensystem und dem Kamerakoordinatensystem;
Erfassen (1034) einer linearen Gleichung durch Verbinden der Randbedingungsbeziehungen in Folge, wobei unbekannte Variablen der linearen Gleichung zwölf Koordinaten der vier 3D-Kontrollpunkte im Kamerakoordinatensystem sind; und Abbilden (1035) jedes Eckpunkts in den 3D-Raum durch Lösen der linearen Gleichung; und

Erkennen (104, 504) dritter Poseinformationen des Zielobjekts basierend auf den dreidimensionalen zweiten Poseinformationen, umfassend:

Berechnen (1041) eines neuen Mittelpunkts basierend auf den Eckpunkten unter einem Weltkoordinatensystem und einem Kamerakoordinatensystem, jeweils separat;
Entfernen (1042) des neuen Mittelpunkts von jedem Eckpunkt unter dem Weltkoordinatensystem und dem Kamerakoordinatensystem, jeweils separat;
Berechnen (1043) einer selbstkonjugierten Matrix, wobei die selbstkonjugierte Matrix ein Produkt zwischen Eckpunkten unter dem Kamerakoordinatensystem und einer transponierten Matrix von Eckpunkten unter dem Weltkoordinatensystem ist;
Erfassen (1044) eines Produkts zwischen einer ersten orthogonalen Matrix, einer Diagonalmatrix und einer transponierten Matrix einer zweiten orthogonalen Matrix durch Durchführen einer Singulärwertzerlegung an der selbstkonjugierten Matrix;
Berechnen (1045) eines Produkts zwischen der zweiten orthogonalen Matrix und einer transponierten Matrix der ersten orthogonalen Matrix als eine Richtung des Zielobjekts unter dem Weltkoordinatensystem; Erfassen (1046) eines Projektionspunkts durch Rotieren des neuen Mittelpunkts unter dem Weltkoordinatensystem entlang der Richtung; und Erfassen (1047) einer Position des Zielobjekts unter dem Weltkoordinatensystem durch Subtrahieren des Projektionspunkts von dem neuen Mittelpunkt unter dem Kamerakoordinatensystem;

wobei das zweidimensionale Detektionsmodell einen Encoder (310), einen Decoder (320) und ein Prädiktionsnetzwerk (330) umfasst; der Encoder (310) eine konvolutionale Schicht (311), ein erstes Restnetzwerk (312), ein zweites Restnetzwerk (313), ein drittes Restnetzwerk (314), ein viertes Restnetzwerk (315) und ein fünftes Restnetzwerk (316) umfasst,
wobei das erste Restnetzwerk (312), das zweite Restnetzwerk (313), das dritte Restnetzwerk (314), das vierte Restnetzwerk (315) und das fünfte Restnetzwerk (316) jeweils mindestens einen Engstellenrestblock umfassen; Erkennen (102) der zweidimensionalen ersten Poseinformationen der Begrenzungsbox durch Eingeben der Bilddaten in das zweidimensionale Detektionsmodell umfasst:
Erfassen (1021) eines ersten Bildmerkmals durch Encodieren der Bilddaten im Encoder, umfassend:
Erfassen eines Merkmals der ersten Ebene durch Durchführen eines Konvolutionsprozesses an den Bilddaten in der konvolutionalen Schicht;
Erfassen eines Merkmals der zweiten Ebene durch Verarbeiten des Merkmals der ersten Ebene im ersten Restnetzwerk;
Erfassen eines Merkmals der dritten Ebene durch Verarbeiten des Merkmals der zweiten Ebene im zweiten Restnetzwerk;
Erfassen eines Merkmals der vierten Ebene durch Verarbeiten des Merkmals der dritten Ebene im dritten Restnetzwerk; Erfassen eines Merkmals der fünften Ebene durch Verarbeiten des Merkmals der vierten Ebene im vierten Restnetzwerk; und
Erfassen eines Merkmals der sechsten Ebene durch Verarbeiten des Merkmals der fünften Ebene im fünften Restnetzwerk;

Erfassen (1022) eines zweiten Bildmerkmals durch Decodieren des ersten Bildmerkmals im Decoder; und, Abbilden (1023) des zweiten Bildmerkmals im Prädiktionsnetzwerk auf die zweidimensionalen ersten Poseinformationen der Begrenzungsbox;

wobei der Decoder (320) eine transponierte konvolutionale Schicht (321) und ein sechstes Restnetzwerk (322) umfasst, wobei das sechste Restnetzwerk (322) eine Vielzahl von Engstellenrestblöcken umfasst; und Erfassen (1022) des zweiten Bildmerkmals durch Decodieren des ersten Bildmerkmals im Decoder umfasst:

Erfassen eines Merkmals der siebten Ebene durch Durchführen eines Konvolutionsprozesses an den Daten des Merkmals der sechsten Ebene in der transponierten konvolutionalen Schicht;
Bilden eines Merkmals der achten Ebene durch Kombinieren des Merkmals der fünften Ebene mit dem Merkmal der siebten Ebene; und,
Erfassen des zweiten Bildmerkmals durch Verarbeiten des Merkmals der achten Ebene im sechsten Restnetzwerk.

2. Verfahren nach Anspruch 1, wobei

eine Anzahl der Engstellenrestblöcke im ersten Restnetzwerk (312) kleiner als eine Anzahl der Engstellenrestblöcke im zweiten Restnetzwerk (313) ist, die Anzahl der Engstellenrestblöcke im zweiten Restnetzwerk (313) kleiner als eine Anzahl der Engstellenrestblöcke im dritten Restnetzwerk (314) ist,
die Anzahl der Engstellenrestblöcke im dritten Restnetzwerk (314) kleiner als eine Anzahl der Engstellenrestblöcke im vierten Restnetzwerk (315) ist, und die Anzahl der Engstellenrestblöcke im vierten Restnetzwerk (315) gleich einer Anzahl der Engstellenrestblöcke im fünften Restnetzwerk (316) ist; und
eine Abmessung des Merkmals der zweiten Ebene höher als eine Abmessung des Merkmals der dritten Ebene ist, die Abmessung des Merkmals der dritten Ebene höher als eine Abmessung des Merkmals der vierten Ebene ist, die Abmessung des Merkmals der vierten Ebene höher als eine Abmessung des Merkmals der fünften Ebene ist, und die Abmessung des Merkmals der fünften Ebene höher als eine Abmessung des Merkmals der sechsten Ebene ist.

3. Verfahren nach Anspruch 1, wobei eine Abmessung des zweiten Bildmerkmals höher als eine Abmessung des Merkmals der sechsten Ebene ist.

4. Verfahren nach Anspruch 1, wobei

das Prädiktionsnetzwerk (330) ein erstes Prädiktionsnetzwerk (331), ein zweites Prädiktionsnetzwerk (332), ein drittes Prädiktionsnetzwerk (333) und ein viertes Prädiktionsnetzwerk (334) umfasst, wobei das erste Prädiktionsnetzwerk (331), das zweite Prädiktionsnetzwerk (332), das dritte Prädiktionsnetzwerk (333) und das vierte Prädiktionsnetzwerk (334) jeweils eine Vielzahl von Engstellenrestblöcken umfassen; und Abbilden (1023) des zweiten Bildmerkmals im Prädiktionsnetzwerk auf die zweidimensionalen ersten Poseinformationen der Begrenzungsbox umfasst:

Erfassen eines Mittelpunkts der Begrenzungsbox durch Verarbeiten des zweiten Bildmerkmals im ersten Prädiktionsnetzwerk;
Erfassen einer Tiefe der Begrenzungsbox durch Verarbeiten des zweiten Bildmerkmals im zweiten Prädiktionsnetzwerk;
Erfassen einer Skalierung der Begrenzungsbox durch Verarbeiten des zweiten Bildmerkmals im dritten Prädiktionsnetzwerk; und
Erfassen eines Abstands, um den ein Eckpunkt in der Begrenzungsbox relativ zu dem Mittelpunkt versetzt ist, durch Verarbeiten des zweiten Bildmerkmals im vierten Prädiktionsnetzwerk.

5. Verfahren nach einem der Ansprüche 1 bis 4, weiter umfassend:

Bestimmen (505) eines dreidimensionalen Materials, das an das Zielobjekt angepasst ist;
Konfigurieren (506) vierter Poseinformationen für das Material, wobei die vierten Poseinformationen Poseinformationen sind, die an die ersten Poseinformationen und die dritten Poseinformationen angepasst sind; und
Anzeigen (507) des Materials in den Bilddaten gemäß den vierten Poseinformationen;
wobei die ersten Poseinformationen eine Skalierung der Begrenzungsbox umfassen, und die dritten Poseinformationen eine Richtung und eine Position des Zielobjekts umfassen; und
Konfigurieren (506) der vierten Poseinformationen für das Material umfasst:

Versetzen der Position des Zielobjekts um einen spezifizierten Abstand und Verwenden der versetzten Position als eine Position des Materials;
Verringern der Skalierung der Begrenzungsbox auf eine spezifizierte Skalierung und Verwenden der verringerten Skalierung als eine Skalierung des Materials; und
Konfigurieren der Richtung des Zielobjekts als eine Richtung des Materials.

6. Einrichtung zur Erkennung von Objektposen, umfassend:

ein Bilddaten-Erfassungsmodul (601), das zum Erfassen (101, 501) von Bilddaten ausgebildet ist, wobei die Bilddaten (430) ein Zielobjekt (201) umfassen;
ein Detektionsmodul (602) für erste Poseinformationen, ausgebildet zum Erkennen (102, 502) zweidimensionaler erster Poseinformationen einer dreidimensionalen Begrenzungsbox als Reaktion auf deren Projektion auf die Bilddaten, indem die Bilddaten in ein zweidimensionales Detektionsmodell eingegeben werden, wobei die ersten Poseinformationen einen Mittelpunkt der Begrenzungsbox, acht Eckpunkte der Begrenzungsbox und eine Tiefe der Begrenzungsbox umfassen, und die Begrenzungsbox ausgebildet ist, eine Objektpose des Zielobjekts (201) in einem 3D-Raum zu beschreiben;
ein Abbildungsmodul (603) für zweite Poseinformationen, ausgebildet zum Abbilden (103, 503) der zweidimensionalen ersten Poseinformationen in dreidimensionale zweite Poseinformationen der Begrenzungsbox; und
ein Detektionsmodul (604) für dritte Poseinformationen, ausgebildet zum Erkennen (104, 504) dritter Poseinformationen des Zielobjekts basierend auf den dreidimensionalen zweiten Poseinformationen;
wobei das Abbildungsmodul (603) für zweite Poseinformationen Folgendes umfasst:

ein Kontrollpunkt-Abfragemodul, ausgebildet zum Abfragen von Kontrollpunkten unter einem Weltkoordinatensystem und einem Kamerakoordinatensystem, jeweils separat;
ein Punktdarstellungsmodul, ausgebildet zum Darstellen des Mittelpunkts und jedes der Eckpunkte als eine gewichtete Summe der Kontrollpunkte unter dem Weltkoordinatensystem und dem Kamerakoordinatensystem, jeweils separat;
ein Modul zum Konstruieren einer Randbedingungsbeziehung, ausgebildet zum Konstruieren einer Randbedingungsbeziehung der Tiefe, des Mittelpunkts und jedes Eckpunkts zwischen dem Weltkoordinatensystem und dem Kamerakoordinatensystem;

ein Modul zum Erzeugen einer linearen Gleichung, ausgebildet zum Erfassen einer linearen Gleichung durch Verbinden der Randbedingungsbeziehungen in Reihe, wobei unbekannte Variablen der linearen Gleichung zwölf Koordinaten der vier 3D-Kontrollpunkte im Kamerakoordinatensystem sind;

und ein Modul zum Lösen einer linearen Gleichung, ausgebildet zum Abbilden jedes Eckpunkts in den 3D-Raum durch Lösen der linearen Gleichung;

das Detektionsmodul (604) für dritte Poseinformationen Folgendes umfasst:

ein Mittelpunkt-Berechnungsmodul, ausgebildet zum Berechnen eines neuen Mittelpunkts basierend auf den Eckpunkten unter einem Weltkoordinatensystem und einem Kamerakoordinatensystem, jeweils separat;

ein Mittelpunkt-Entfernungsmodul, ausgebildet zum Entfernen des neuen Mittelpunkts von jedem Eckpunkt unter dem Weltkoordinatensystem und dem Kamerakoordinatensystem, jeweils separat;

ein Berechnungsmodul für eine selbstkonjugierte Matrix, ausgebildet zum Berechnen einer selbstkonjugierten Matrix,

wobei die selbstkonjugierte Matrix ein Produkt zwischen den Eckpunkten unter dem Kamerakoordinatensystem und einer transponierten Matrix der Eckpunkte unter dem Weltkoordinatensystem ist; ein Singulärwertzerlegungsmodul, ausgebildet zum Erfassen eines Produkts zwischen einer ersten orthogonalen Matrix, einer Diagonalmatrix und einer transponierten Matrix einer zweiten orthogonalen Matrix durch Durchführen einer Singulärwertzerlegung an der selbstkonjugierten Matrix;

ein Richtungs-Berechnungsmodul, ausgebildet zum Berechnen eines Produkts zwischen der zweiten orthogonalen Matrix und einer transponierten Matrix der ersten orthogonalen Matrix als eine Richtung des Zielobjekts unter dem Weltkoordinatensystem;

ein Projektionspunkt-Berechnungsmodul, ausgebildet zum Erfassen eines Projektionspunkts durch Rotieren des neuen Mittelpunkts unter dem Weltkoordinatensystem entlang der Richtung; und

ein Positions-Berechnungsmodul, ausgebildet zum Erfassen einer Position des Zielobjekts unter dem Weltkoordinatensystem durch Subtrahieren des Projektionspunkts von dem neuen Mittelpunkt unter dem Kamerakoordinatensystem;

das zweidimensionale Detektionsmodell einen Encoder (310), einen Decoder (320) und ein Prädiktionsnetzwerk (330) umfasst; der Encoder (310) eine konvolutionale Schicht (311), ein erstes Restnetzwerk (312), ein zweites Restnetzwerk (313), ein drittes Restnetzwerk (314), ein viertes Restnetzwerk (315) und ein fünftes Restnetzwerk (316) umfasst,

wobei das erste Restnetzwerk (312), das zweite Restnetzwerk (313), das dritte Restnetzwerk (314), das vierte Restnetzwerk (315) und das fünfte Restnetzwerk (316) jeweils mindestens einen Engstellenrestblock umfassen; und

das Detektionsmodul (602) für erste Poseinformationen umfasst:

ein Encodierungsmodul, ausgebildet zum
Erfassen eines ersten Bildmerkmals durch Encodieren der Bilddaten im Encoder, Erfassen eines Merkmals der ersten Ebene durch Durchführen eines Konvolutionsprozesses an den Bilddaten in der konvolutionalen Schicht; Erfassen eines Merkmals der zweiten Ebene durch Verarbeiten des Merkmals der ersten Ebene im ersten Restnetzwerk;
Erfassen eines Merkmals der dritten Ebene durch Verarbeiten des Merkmals der zweiten Ebene im zweiten Restnetzwerk; Erfassen eines Merkmals der vierten Ebene durch Verarbeiten des Merkmals der dritten Ebene im dritten Restnetzwerk; Erfassen eines Merkmals der fünften Ebene durch Verarbeiten des Merkmals der vierten Ebene im vierten Restnetzwerk; und Erfassen eines Merkmals der sechsten Ebene durch Verarbeiten des Merkmals der fünften Ebene im fünften Restnetzwerk;

ein Decodierungsmodul, ausgebildet zum Erfassen eines zweiten Bildmerkmals durch Decodieren des ersten Bildmerkmals im Decoder; und

ein Abbildungsmodul, ausgebildet zum Abbilden, im Prädiktionsnetzwerk, des zweiten Bildmerkmals auf die zweidimensionalen ersten Poseinformationen der Begrenzungsbox;

wobei der Decoder (320) eine transponierte konvolutionale Schicht (321) und ein sechstes Restnetzwerk (322) umfasst, wobei das sechste Restnetzwerk (322) eine Vielzahl von Engstellenrestblöcken umfasst; und

wobei das Decodierungsmodul weiter ausgebildet ist, um: ein Merkmal der siebten Ebene durch Durchführen eines Konvolutionsprozesses an den Daten des Merkmals der sechsten Ebene in der transponierten konvolutionalen Schicht zu erfassen; ein Merkmal der achten Ebene durch Kombinieren des Merkmals der fünften Ebene mit dem Merkmal der siebten Ebene zu bilden; und das zweite Bildmerkmal durch Verarbeiten des Merkmals der achten Ebene im sechsten Restnetzwerk zu erfassen.

**7.** Computervorrichtung zur Erkennung von Objektposen, umfassend:

mindestens einen Prozessor;
einen Speicher, ausgebildet, um darin mindestens ein Programm zu speichern;
wobei der mindestens eine Prozessor, wenn er das mindestens eine Programm lädt und ausführt, veranlasst wird, das Verfahren zur Erkennung von Objektposen, wie in einem der Ansprüche 1 bis 5 definiert, durchzuführen.

**8.** Computerlesbares Speichermedium, das darin mindestens ein Computerprogramm speichert, wobei das mindestens eine Computerprogramm, wenn es durch einen Prozessor geladen und ausgeführt wird, den Prozessor veranlasst, das Verfahren zur Erkennung von Objektposen, wie in einem der Ansprüche 1 bis 5 definiert, durchzuführen.

**Revendications**

**1.** Procédé de détection de poses d'objet, mis en œuvre par un ordinateur, et comprenant :

l'acquisition (101, 501) de données d'image, dans lequel les données d'image comprennent un objet cible ;
la détection (102, 502) de premières informations de pose bidimensionnelles d'une boîte englobante tridimensionnelle en réponse au fait d'être projetées sur les données d'image en introduisant les données d'image dans un modèle de détection bidimensionnel, dans lequel les premières informations de pose comprennent un point central de la boîte englobante, huit sommets de la boîte englobante, et une profondeur de la boîte englobante, et la boîte englobante est configurée pour décrire une pose de l'objet cible dans un espace 3D ;
la mise en correspondance (103, 503) des premières informations de pose bidimensionnelles sur des deuxièmes informations de pose tridimensionnelles de la boîte englobante, comprenant :

l'interrogation (1031) de points de commande dans un système de coordonnées universel et un système de coordonnées de caméra, séparément ;
la représentation (1032) du point central et de chacun des sommets en tant qu'une somme pondérée de quatre points de commande dans le système de coordonnées universel et le système de coordonnées de caméra, séparément ;
la construction (1033) d'une relation de contrainte de la profondeur, du point central et de chaque sommet entre le système de coordonnées universel et le système de coordonnées de caméra ;
l'acquisition (1034) d'une équation linéaire en reliant en série les relations de contrainte, dans lequel des variables inconnues de l'équation linéaire sont douze coordonnées des quatre points de commande 3D dans le système de coordonnées de caméra ; et la mise en correspondance (1035) de chaque sommet sur un espace 3D en résolvant l'équation linéaire ; et

la détection (104, 504) de troisièmes informations de pose de l'objet cible sur la base des deuxièmes informations de pose tridimensionnelles, comprenant :

le calcul (1041) d'un nouveau point central sur la base des sommets dans un système de coordonnées universel et un système de coordonnées de caméra, séparément ;
le retrait (1042) du nouveau point central de chaque sommet dans le système de coordonnées universel et le système de coordonnées de caméra, séparément ;
le calcul (1043) d'une matrice autoconjuguée, dans lequel la matrice autoconjuguée est un produit entre des sommets dans le système de coordonnées de caméra et une matrice transposée de sommets dans le système de coordonnées universel ;
l'acquisition (1044) d'un produit entre une première matrice orthogonale, une matrice diagonale, et une matrice transposée d'une deuxième matrice orthogonale en réalisant une décomposition en valeurs singulières sur la matrice autoconjuguée ;
le calcul (1045) d'un produit entre la deuxième matrice orthogonale et une matrice transposée de la première matrice orthogonale en tant qu'une direction de l'objet cible dans le système de coordonnées universel ;
l'acquisition (1046) d'un point de projection en faisant tourner le nouveau point central dans le système de coordonnées universel le long de la direction ; et l'acquisition (1047) d'une position de l'objet cible dans le système de coordonnées universel en soustrayant le point de projection du nouveau point central dans le système de coordonnées de caméra ;

dans lequel le modèle de détection bidimensionnel comprend un encodeur (310), un décodeur (320), et un réseau de prédiction (330) ; l'encodeur (310) comprend une couche convolutionnelle (311), un premier réseau résiduel (312), un deuxième réseau résiduel (313), un troisième réseau résiduel (314), un quatrième réseau résiduel (315), et un cinquième réseau résiduel (316), dans lequel chacun du premier réseau résiduel (312), du deuxième réseau résiduel (313), du troisième réseau résiduel (314), du quatrième réseau résiduel (315), et du cinquième réseau résiduel (316) comprend au moins un bloc résiduel de goulot d'étranglement ;

la détection (102) des premières informations de pose bidimensionnelles de la boîte englobante en introduisant les données d'image dans le modèle de détection bidimensionnel comprend :

l'acquisition (1021) d'une première caractéristique d'image en encodant les données d'image dans l'encodeur, comprenant :

l'acquisition d'une caractéristique de premier niveau en réalisant un processus de convolution sur les données d'image dans la couche convolutionnelle ;

l'acquisition d'une caractéristique de deuxième niveau en traitant la caractéristique de premier niveau dans le premier réseau résiduel ;

l'acquisition d'une caractéristique de troisième niveau en traitant la caractéristique de deuxième niveau dans le deuxième réseau résiduel ;

l'acquisition d'une caractéristique de quatrième niveau en traitant la caractéristique de troisième niveau dans le troisième réseau résiduel ; l'acquisition d'une caractéristique de cinquième niveau en traitant la caractéristique de quatrième niveau dans le quatrième réseau résiduel ; et

l'acquisition d'une caractéristique de sixième niveau en traitant la caractéristique de cinquième niveau dans le cinquième réseau résiduel ;

l'acquisition (1022) d'une deuxième caractéristique d'image en décodant la première caractéristique d'image dans le décodeur ; et

la mise en correspondance (1023), dans le réseau de prédiction, de la deuxième caractéristique d'image sur les premières informations de pose bidimensionnelles de la boîte englobante ;

dans lequel le décodeur (320) comprend une couche (321) convolutionnelle transposée et un sixième réseau résiduel (322), dans lequel le sixième réseau résiduel (322) comprend une pluralité de blocs résiduels de goulot d'étranglement ; et

l'acquisition (1022) de la deuxième caractéristique d'image en décodant la première caractéristique d'image dans le décodeur comprend :

l'acquisition d'une caractéristique de septième niveau en réalisant un processus de convolution sur les données de caractéristique de sixième niveau dans la couche convolutionnelle transposée ;

la formation d'une caractéristique de huitième niveau en combinant la caractéristique de cinquième niveau avec la caractéristique de septième niveau ; et

l'acquisition de la deuxième caractéristique d'image en traitant la caractéristique de huitième niveau dans le sixième réseau résiduel.

2. Procédé selon la revendication 1, dans lequel

un nombre des blocs résiduels de goulot d'étranglement dans le premier réseau résiduel (312) est inférieur à un nombre des blocs résiduels de goulot d'étranglement dans le deuxième réseau résiduel (313), le nombre des blocs résiduels de goulot d'étranglement dans le deuxième réseau résiduel (313) est inférieur à un nombre des blocs résiduels de goulot d'étranglement dans le troisième réseau résiduel (314), le nombre des blocs résiduels de goulot d'étranglement dans le troisième réseau résiduel (314) est inférieur à un nombre des blocs résiduels de goulot d'étranglement dans le quatrième réseau résiduel (315), et le nombre des blocs résiduels de goulot d'étranglement dans le quatrième réseau résiduel (315) est égal à un nombre des blocs résiduels de goulot d'étranglement dans le cinquième réseau résiduel (316) ; et

une dimension de la caractéristique de deuxième niveau est supérieure à une dimension de la caractéristique de troisième niveau, la dimension de la caractéristique de troisième niveau est supérieure à une dimension de la caractéristique de quatrième niveau, la dimension de la caractéristique de quatrième niveau est supérieure à une dimension de la caractéristique de cinquième niveau, et la dimension de la caractéristique de cinquième niveau est supérieure à une dimension de la caractéristique de sixième niveau.

3. Procédé selon la revendication 1, dans lequel une dimension de la deuxième caractéristique d'image est supérieure à une dimension de la caractéristique de sixième niveau.

4. Procédé selon la revendication 1, dans lequel

le réseau de prédiction (330) comprend un premier réseau de prédiction (331), un deuxième réseau de prédiction (332), un troisième réseau de prédiction (333), et un quatrième réseau de prédiction (334), dans lequel chacun du premier réseau de prédiction (331), du deuxième réseau de prédiction (332), du troisième réseau de prédiction (333), et du quatrième réseau de prédiction (334) comprend une pluralité de blocs résiduels de goulot d'étranglement ; et
la mise en correspondance (1023), dans le réseau de prédiction, de la deuxième caractéristique d'image sur les premières informations de pose bidimensionnelles de la boîte englobante comprend :

l'acquisition d'un point central de la boîte englobante en traitant la deuxième caractéristique d'image dans le premier réseau de prédiction ;
l'acquisition d'une profondeur de la boîte englobante en traitant la deuxième caractéristique d'image dans le deuxième réseau de prédiction ;
l'acquisition d'une échelle de la boîte englobante en traitant la deuxième caractéristique d'image dans le troisième réseau de prédiction ; et
l'acquisition d'une distance selon laquelle un sommet dans la boîte englobante présente un décalage par rapport au point central en traitant la deuxième caractéristique d'image dans le quatrième réseau de prédiction.

5. Procédé selon l'une quelconque des revendications 1 à 4, comprenant en outre :

la détermination (505) d'un matériau tridimensionnel adapté à l'objet cible ;
la configuration (506) de quatrièmes informations de pose pour le matériau, dans lequel les quatrièmes informations de pose sont des informations de pose adaptées aux premières informations de pose et aux troisièmes informations de pose ; et
l'affichage (507) du matériau dans les données d'image selon les quatrièmes informations de pose ;
dans lequel les premières informations de pose comprennent une échelle de la boîte englobante, et les troisièmes informations de pose comprennent une direction et une position de l'objet cible ; et
la configuration (506) des quatrièmes informations de pose pour le matériau comprend :

le décalage de la position de l'objet cible d'une distance spécifiée et l'utilisation de la position décalée en tant qu'une position du matériau ;
la réduction de l'échelle de la boîte englobante à une échelle spécifiée et l'utilisation de l'échelle réduite en tant qu'une échelle du matériau ; et
la configuration de la direction de l'objet cible en tant qu'une direction du matériau.

6. Appareil de détection de poses d'objet, comprenant :

un module (601) d'acquisition de données d'image, configuré pour acquérir (101, 501) des données d'image, dans lequel les données d'image (430) comprennent un objet cible (201) ;
un module (602) de détection de premières informations de pose, configuré pour détecter (102, 502) des premières informations de pose bidimensionnelles d'une boîte englobante tridimensionnelle en réponse au fait d'être projetées sur les données d'image en introduisant les données d'image dans un modèle de détection bidimensionnel, dans lequel les premières informations de pose comprennent un point central de la boîte englobante, huit sommets de la boîte englobante, et une profondeur de la boîte englobante, et la boîte englobante est configurée pour décrire une pose de l'objet cible (201) dans un espace 3D ;
un module (603) de mise en correspondance de deuxièmes informations de pose, configuré pour mettre en correspondance (103, 503) les premières informations de pose bidimensionnelles sur des deuxièmes informations de pose tridimensionnelles de la boîte englobante ; et
un module (604) de détection de troisièmes informations de pose, configuré pour détecter (104, 504) des troisièmes informations de pose de l'objet cible sur la base des deuxièmes informations de pose tridimensionnelles ;

dans lequel le module (603) de mise en correspondance de deuxièmes informations de pose comprend un module d'interrogation de points de commande, configuré pour interroger des points de commande dans un système de coordonnées universel et un système de coordonnées de caméra, séparément ;

un module de représentation de points, configuré pour représenter le point central et chacun des sommets en tant qu'une somme pondérée des points de commande dans le système de coordonnées universel et le système de coordonnées de caméra, séparément ;

un module de construction de relation de contrainte, configuré pour construire une relation de contrainte de la profondeur, du point central et de chaque sommet entre le système de coordonnées universel et le système de coordonnées de caméra ;

un module de génération d'équation linéaire, configuré pour acquérir une équation linéaire en reliant en série les relations de contrainte, dans lequel des variables inconnues de l'équation linéaire sont douze coordonnées des quatre points de commande 3D dans le système de coordonnées de caméra ;

et un module de résolution d'équation linéaire, configuré pour mettre en correspondance chaque sommet sur un espace 3D en résolvant l'équation linéaire ;

le module (604) de détection de troisièmes informations de pose comprend un module de calcul de point central, configuré pour calculer un nouveau point central sur la base des sommets dans le système de coordonnées universel et le système de coordonnées de caméra, séparément ;

un module de retrait de point central, configuré pour retirer le nouveau point central de chaque sommet dans le système de coordonnées universel et le système de coordonnées de caméra, séparément ;

un module de calcul de matrice autoconjuguée, configuré pour calculer une matrice autoconjuguée, dans lequel la matrice autoconjuguée est un produit entre les sommets dans le système de coordonnées de caméra et une matrice transposée des sommets dans le système de coordonnées universel ; un module de décomposition en valeurs singulières, configuré pour acquérir un produit entre une première matrice orthogonale, une matrice diagonale, et une matrice transposée d'une deuxième matrice orthogonale en réalisant une décomposition en valeurs singulières sur la matrice autoconjuguée ;

un module de calcul de direction, configuré pour calculer un produit entre la deuxième matrice orthogonale et une matrice transposée de la première matrice orthogonale en tant qu'une direction de l'objet cible dans le système de coordonnées universel ;

un module de calcul de point de projection, configuré pour acquérir un point de projection en faisant tourner le nouveau point central dans le système de coordonnées universel le long de la direction ; et

un module de calcul de position, configuré pour acquérir une position de l'objet cible dans le système de coordonnées universel en soustrayant le point de projection du nouveau point central dans le système de coordonnées de caméra ;

le modèle de détection bidimensionnel comprend un encodeur (310), un décodeur (320), et un réseau de prédiction (330) ; l'encodeur (310) comprend une couche convolutionnelle (311), un premier réseau résiduel (312), un deuxième réseau résiduel (313), un troisième réseau résiduel (314), un quatrième réseau résiduel (315), et un cinquième réseau résiduel (316),

dans lequel chacun du premier réseau résiduel (312), du deuxième réseau résiduel (313), du troisième réseau résiduel (314), du quatrième réseau résiduel (315), et du cinquième réseau résiduel (316) comprend au moins un bloc résiduel de goulot d'étranglement ; et

le module (602) de détection de premières informations de pose comprend :

un module d'encodage, configuré pour acquérir une première caractéristique d'image en encodant les données d'image dans l'encodeur, acquérir une caractéristique de premier niveau en réalisant un processus de convolution sur les données d'image dans la couche convolutionnelle ; acquérir une caractéristique de deuxième niveau en traitant la caractéristique de premier niveau dans le premier réseau résiduel ;

acquérir une caractéristique de troisième niveau en traitant la caractéristique de deuxième niveau dans le deuxième réseau résiduel ; acquérir une caractéristique de quatrième niveau en traitant la caractéristique de troisième niveau dans le troisième réseau résiduel ; acquérir une caractéristique de cinquième niveau en traitant la caractéristique de quatrième niveau dans le quatrième réseau résiduel ; et acquérir une caractéristique de sixième niveau en traitant la caractéristique de cinquième niveau dans le cinquième réseau résiduel ;

un module de décodage, configuré pour acquérir une deuxième caractéristique d'image en décodant la première caractéristique d'image dans le décodeur ; et

un module de mise en correspondance, configuré pour mettre en correspondance, dans le réseau de prédiction, la deuxième caractéristique d'image sur les premières informations de pose bidimensionnelles de la boîte englobante ;

dans lequel le décodeur (320) comprend une couche (321) convolutionnelle transposée et un sixième réseau résiduel (322), dans lequel le sixième réseau résiduel (322) comprend une pluralité de blocs résiduels de goulot d'étranglement ; et

le module de décodage est en outre configuré pour : acquérir une caractéristique de septième niveau en réalisant un processus de convolution sur les données de caractéristique de sixième niveau dans la couche convolutionnelle transposée ; former une caractéristique de huitième niveau en combinant la caractéristique de cinquième niveau avec la caractéristique de septième niveau ; et acquérir la deuxième caractéristique d'image en traitant la caractéristique de huitième niveau dans le sixième réseau résiduel.

7. Dispositif informatique de détection de poses d'objet, comprenant :

au moins un processeur ;
une mémoire, configurée pour stocker au moins un programme dans celle-ci ;
dans lequel le au moins un processeur, lors du chargement et de l'exécution du au moins un programme, est amené à réaliser le procédé de détection de poses d'objet tel que défini dans l'une quelconque des revendications 1 à 5.

8. Support de stockage lisible par ordinateur, stockant au moins un programme informatique dans celui-ci, dans lequel le au moins un programme informatique, lorsqu'il est chargé et exécuté par un processeur, amène le processeur à réaliser le procédé de détection de poses d'objet tel que défini dans l'une quelconque des revendications 1 à 5.

| Acquire image data | 101 |

↓

| Detect two-dimensional first pose information of a three-dimensional bounding box in response to being projected onto the image data by inputting the image data into a 2D detection model | 102 |

↓

| Map the first pose information to three-dimensional second pose information | 103 |

↓

| Detect third pose information of the target object based on the second pose information | 104 |

**FIG. 1**

**FIG. 2**

**FIG. 3**

**FIG. 4**

Acquire image data is acquired — 501

Detect two-dimensional first pose information of a three-dimensional bounding box in response to being projected onto the image data by inputting the image data into a two-dimensional detection model — 502

Map the first pose information to three-dimensional second pose information — 503

Detect third pose information of a target object based on the second pose information — 504

Determine a three-dimensional material that is adapted to the target object — 505

Configure fourth pose information for the material — 506

Display a material in the image data according to the fourth pose information — 507

**FIG. 5**

| Image data acquiring module | ~ 601 |
| First pose information detecting module | ~ 602 |
| Second pose information mapping module | ~ 603 |
| Third pose information detecting module | ~ 604 |

**FIG. 6**

Computer device

12

28

Memory

30

34

RAM

Storage system

16

Cache

40

Processing unit

32

42

18

20

24

22

Display

I/O interface

Network adapter

14

External device

**FIG. 7**

Acquire a first image feature by encoding the image data in an encoder — 1021

Acquire a second image feature by decoding the first image feature in a decoder — 1022

Map the second image feature to the two-dimensional first pose information of the bounding box in a prediction network — 1023

**FIG. 8**

In a target detection model, detect a part of the two-dimensional first pose information of the bounding box in the image data and a region in which a target object is located in the image data — 1021'

Extract data in the region from the image data as region data — 1022'

Acquire a part of the two-dimensional first pose information of the bounding box by encoding the region data in an encoding model — 1023'

**FIG. 9**

Equerry control points under a world coordinate system and a camera coordinate system separately — 1031

Represent a center point and a vertex as a weighted sum of the control points under the world coordinate system and the camera coordinate system separately — 1032

Construct a constraint relationship of a depth, a center point, and a vertex between the world coordinate system and the camera coordinate system — 1033

Acquire a linear equation by connecting the constraint relationships in series — 1034

Map the vertex to 3D space by solving the linear equation — 1035

**FIG. 10**

Calculate a new center point based on a vertex under a world coordinate system and a camera coordinate system, separately — 1041

Remove the new center point from the vertex under the world coordinate system and the camera coordinate system, separately — 1042

After de-centering the new center point from the vertex, calculate a self-conjugate matrix — 1043

Acquire a product of a first orthogonal matrix, a diagonal matrix, and a transpose matrix of the second orthogonal matrix by performing a singular value decomposition on the self-conjugate matrix — 1044

Calculate a product of the second orthogonal matrix and a transpose matrix of the first orthogonal matrix as a direction of a target object under the world coordinate system — 1045

Acquire a projection point by rotating the new center point under the world coordinate system along the direction — 1046

Acquire a position of the target object under the world coordinate system by subtracting the projection point from the new center point under the camera coordinate system — 1047

**FIG. 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110930454 A

- US 2018137644 A1

**Non-patent literature cited in the description**

- Mean-Shift Algorithm for 3D Spatial Positioning. **ZHONGMIN WANG et al.** PROCEDIA COMPUTER SCIENCE. ELSEVIER

- **KANG JIA et al.** YOLO-6D+: Single Shot 6D Pose Estimation Using Privileged Silhouette Information. *International Conference on Image Processing and Robotics (ICIP)*, 2020